# EUROPEAN PATENT APPLICATION

(11) **EP 4 474 741 A1**
(43) Date of publication of application: **11.12.2024**
(21) Application number: 23850204.1
(22) Date of filing: 11.05.2023
(51) Int. Cl.: F25D 29/00, F25D 23/02, E05F 15/614, E05F 15/73, G06F 3/041, G06F 3/16, E05F 15/43

(54) **ELECTRIC APPARATUS AND CONTROL METHOD THEREOF**

(30) Priority: 02.08.2022 KR 20220096408
(71) Applicant: Samsung Electronics Co., Ltd, Suwon-si, Gyeonggi-do 16677 (KR)
(72) Inventor: KANG, Seungwan, Suwon-si, Gyeonggi-do 16677 (KR); CHO, Sungho, Suwon-si, Gyeonggi-do 16677 (KR)
(74) Representative: Gulde & Partner
(86) International application number: PCT/KR2023/006435
(87) International publication number: WO 2024/029693

(57) **Abstract**

According to an embodiment of the disclosure, an electric apparatus may include a door that is rotatable to open and close; a sensor configured to detect rotation of the door, and to produce a corresponding output signal; a motor configured to provide torque to the door to rotate the door; and a processor configured to obtain an open angle of the door based on the output signal produced by the sensor, and, based on the obtained open angle, to control the motor to provide the torque to the door to open the door to a target angle set by a user.

## Description

### [Technical Field]

The disclosure relates to an electric apparatus and control method thereof, and more particularly, to an electric apparatus capable of automatically opening or closing a door and a control method of the electric apparatus.

### [Background Art]

Various electric apparatuses with a door installed thereon are around today. It is common for electric apparatuses including a chamber to accommodate items to include a door. For example, home appliances such as refrigerators, washing machines, ovens, micro-ovens, garment care systems, dish washers, etc., include doors.

Furthermore, it is also common for electric apparatuses including a passenger cabin to have a door. For example, a vehicle includes a door.

The doors of the electric apparatuses are usually opened or closed manually by the user.

However, when the user holds items with both hands to put the items into the chamber of the electric apparatus, the door may need to be opened automatically. In addition, when the door is not closed by the user or not fully closed, the door may need to be closed automatically.

### [Disclosure]

### [Technical Problem]

The disclosure provides an electric apparatus capable of automatically opening or closing a door and a control method of the electric apparatus.

### [Technical Solution]

According to an embodiment of the disclosure, an electric apparatus may include a door that is rotatable to open and close; a sensor configured to detect rotation of the door, and to produce a corresponding output signal; a motor configured to provide torque to the door to rotate the door; and a processor configured to obtain an open angle of the door based on the output signal produced by the sensor, and, based on the obtained open angle, to control the motor to provide the torque to the door to open the door to a target angle set by a user.

According to an embodiment of the disclosure, a method may include detecting, by a sensor, rotation of a door; obtaining, by a processor, an open angle of the door based on the detected rotation; and providing, based on the obtained open angle, a torque to the door by a motor to open the door to a target angle set by a user.

### [Advantageous Effects]

According to embodiments of the disclosure, an electric apparatus capable of automatically opening or closing a door without mutual interference and a control method of the electric apparatus may be provided.

### [Description of Drawings]

FIG. 1 illustrates an electric apparatus, according to an embodiment.
FIG. 2 illustrates a door opening/closing device, according to an embodiment.
FIG. 3 is a bottom view of a door opening/closing device, according to an embodiment.
FIG. 4 is an exploded view of part of a door opening/closing device, according to an embodiment.
FIG. 5 illustrates an example of a door starting to be opened by a door opening/closing device, according to an embodiment.
FIG. 6 illustrates an example of a door being opened by a door opening/closing device, according to an embodiment.
FIG. 7 illustrates an example of a door being closed by a door opening/closing device, according to an embodiment.
FIG. 8 is an exploded view of a portion of a door opening/closing device, according to an embodiment.
FIG. 9 illustrates a configuration of a refrigerator, according to an embodiment.
FIG. 10 illustrates an example of a refrigerator detecting approach of a user, according to an embodiment.

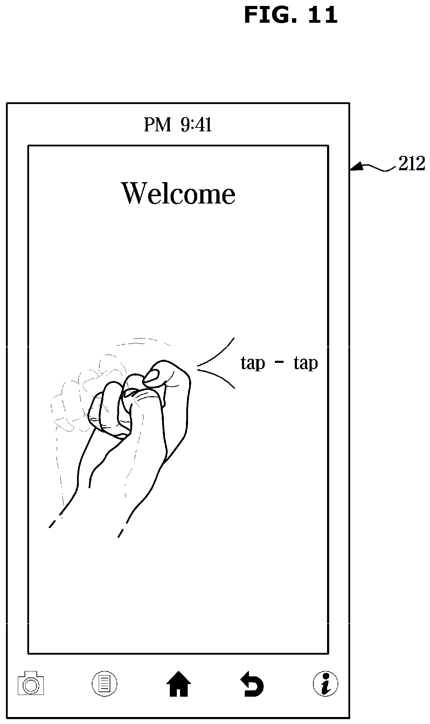

FIGS. 11 and 12 illustrate an example of a refrigerator obtaining a user input through a display, according to an embodiment.
FIG. 13 illustrates an example of an optical module of a refrigerator forming a light spot, according to an embodiment.
FIGS. 14 and 15 illustrate an example of a refrigerator identifying a position of a door, according to an embodiment.
FIG. 16 illustrates a method by which a refrigerator opens a door, according to an embodiment.
FIGS. 17, 18 and 19 illustrate an example of a refrigerator controlling door opening velocity according to the method shown in FIG. 16.
FIG. 20 illustrates a method by which a refrigerator opens a door, according to an embodiment.
FIGS. 21 and 22 illustrate an example of a refrigerator controlling a door open angle according to the method shown in FIG. 20.
FIG. 23 illustrates a method by which a refrigerator opens a door, according to an embodiment.
FIGS. 24, 25 and 26 illustrate an example of a refrigerator controlling a door open angle according to the method shown in FIG. 23.

### [Modes of the Invention]

Like numerals refer to like elements throughout the specification. Not all elements of embodiments of the disclosure will be described, and description of what are commonly known in the art or what overlap each other in the embodiments will be omitted. The terms as used throughout the specification, such as "~ part", "~ module", "~ member", "~ block", etc., may be implemented in software and/or hardware, and a plurality of "~ parts", "~ modules", "~ members", or "~ blocks" may be implemented in a single element, or a single "~ part", "~ module", "~ member", or "~ block" may include a plurality of elements.

It will be further understood that the term "connect" or its derivatives refer both to direct and indirect connection, and the indirect connection includes a connection over a wireless communication network.

The term "include (or including)" or "comprise (or comprising)" is inclusive or open-ended and does not exclude additional, unrecited elements or method steps, unless otherwise mentioned.

Throughout the specification, when it is said that a member is located "on" another member, it implies not only that the member is located adjacent to the other member but also that a third member exists between the two members.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section.

It is to be understood that the singular forms "a," "an," and "the" include plural references unless the context clearly dictates otherwise.

Reference numerals used for method steps are just used for convenience of explanation, but not to limit an order of the steps. Thus, unless the context clearly dictates otherwise, the written order may be practiced otherwise.

The principle and embodiments of the disclosure will now be described with reference to accompanying drawings.

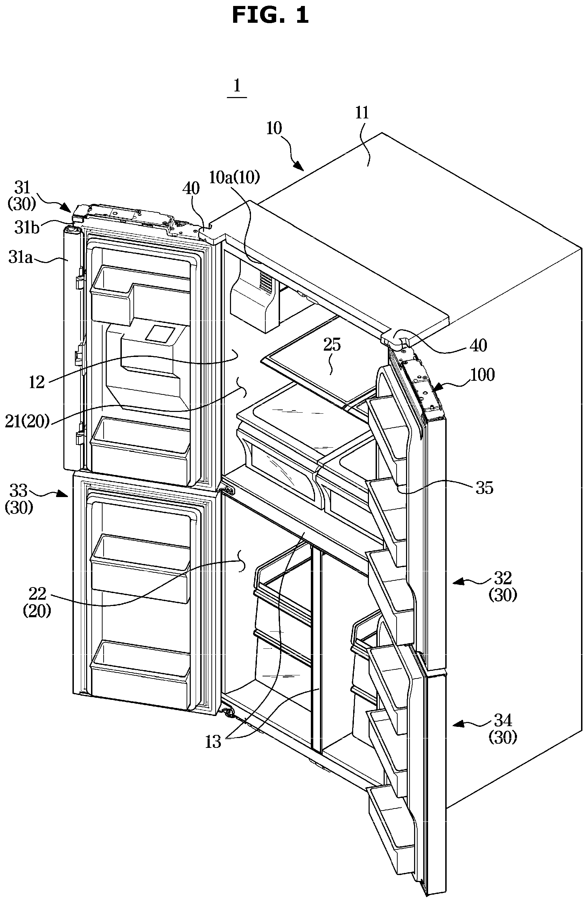

FIG. 1 illustrates an electric apparatus, according to an embodiment of the disclosure.

Referring to FIG. 1, a refrigerator 1 is illustrated as the electric apparatus. It is not, however, limited thereto, and the electric apparatus may include many different kinds of electric apparatuses, such as a refrigerator, a washing machine, an oven, a micro-oven, a garment care system, a dish washer, a vehicle, etc.

The refrigerator 1 may include a housing 10 defining a main body with a portion of the front side opened, a storeroom 20 arranged in the housing 10 with the front side opened, and a door 30 rotationally coupled to the housing 10 to open or close the open front of the storeroom 20.

The housing 10 may include an inner casing 11 forming the storeroom 20 and an outer casing 12 forming the external appearance. Insulation (not shown) may be foamed between the inner casing 11 and the outer casing 12 of the housing 10 to prevent cold air leak from the storeroom 20.

There may be a cold air supplier (not shown) arranged in the housing 10 for supplying cold air into the storeroom 20. The cold air supplier may include a compressor, a condenser, an expansion valve, an evaporator, a fan, a cold air duct, etc.

The storeroom 20 may be divided by a partition wall 13 into a first storeroom 21 and a second storeroom 22. A plurality of racks 25 may be arranged in the storeroom 20 and may divide each of the first and second storerooms 21 and 22 into multiple sections. The racks 25 may be detachably mounted on projections (not shown) formed at the storeroom 20.

The door 30 may be coupled to hinges 40 fixed to the housing 10 to be rotated around a hinge shaft of the hinge 40. The hinges 40 arranged on left and right sides of the housing 10 at the same height may be integrally formed and may also constitute a portion of a housing front 10a. It is not, however, limited thereto, and the hinges 40 may be separately arranged. On the rear side of the door 30, a plurality of door guards 35 may be installed to contain e.g., foods.

A first door 31 and a second door 32 may open or close the first storeroom 21. A third door 33 and a fourth door 34 may open or close the second storeroom 22.

As shown in FIG. 1, the second storeroom 22 may be divided by a vertical partition wall 13 into two chambers while the first storeroom 21 may define an integral chamber. Hence, due to a gap between the first door 31 and the second door 32, the first storeroom 21 may not be completely shielded from the outside. To prevent this, a rotating bar 31a may be arranged at an edge 31b of the first door 31 to seal the gap between the first door 31 and the second door 32.

The rotating bar 31a may be arranged at an opposite edge to the hinge 40 of the first door 31, and may be rotated around the edge 31b of the first door 31. For example, while the first door 31 is closed, the rotating bar 31a may be unfolded toward a direction in which the first door 31 extends, to seal the gap between the first door 31 and the second door 32. While the first door 31 is opened, the rotating bar 31a may be folded in a direction perpendicular to the direction in which the first door 32 extends, to avoid interference with the second door 32.

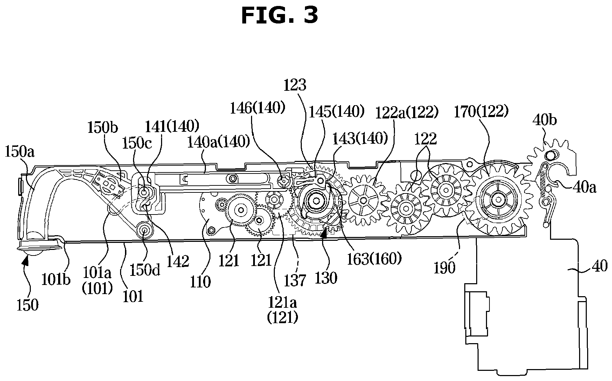

The door 30 may be manually opened or closed by the user, or may be automatically opened or closed by a door opening/closing device 100. The door opening/closing device 100 may include a driving motor 110 (see FIG. 3) provided inside, and may open or close the door 30 by using power of the driving motor 110.

The door opening/closing apparatus 100 will now be described.

The door 30 as will be described below may include the first door 31, the second door 32, the third door 33, and the fourth door 34. The door opening/closing apparatus 100 may be arranged to correspond to all or some of the doors of the refrigerator 1. The refrigerator 1 may include a plurality of door opening/closing devices 100.

The following description will be focused on the door opening/closing device 100 for a door appearing to be positioned on the right-hand side when the refrigerator 1 is viewed from the front, but they may be equally applied to the door opening/closing apparatus 100 for a door positioned on the left-hand side when the refrigerator 1 is viewed from the front.

The door opening/closing device 100 may be arranged on one side of the door 30. For example, the door opening/closing device 100 may be arranged on the top of the door 30. However, it is not limited thereto. For example, the door opening/closing device 100 may be arranged on the bottom of the door 30.

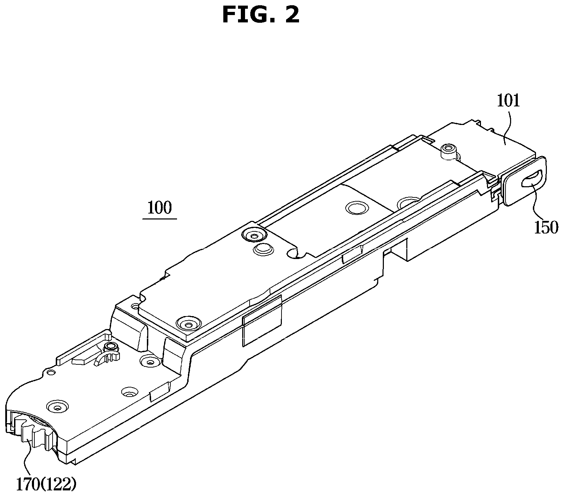

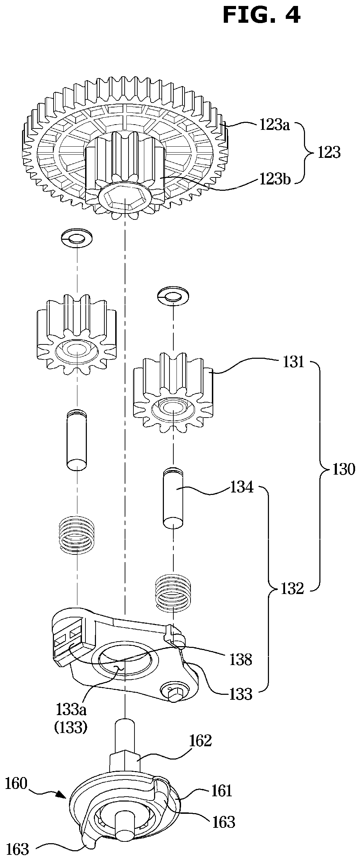

FIG. 2 illustrates a door opening/closing device, according to an embodiment of the disclosure. FIG. 3 is a bottom view of a door opening/closing device, according to an embodiment of the disclosure. FIG. 4 is an exploded view of part of a door opening/closing device, according to an embodiment of the disclosure.

Referring to FIGS. 2 to 4, the door opening/closing device 100 may include a case 101 that defines the external appearance, a driving motor 110 arranged in the case 101 for outputting power to open or close the door 30, and a plurality of gears 121, 122, 123, and 131 arranged in the case 101 for delivering power of the driving motor 110 to a hinge shaft 40a.

An opening 101b may be formed on one side of the case 101, allowing a pusher 150a of a lever 150, which will be described later, to pass through and protrude outward from the case 101. The opening 101b may be formed on the rear side of the case 101 facing the front side of the housing 10. The driving motor 110 may be rotated in both directions, and may deliver power to a hinge gear 40b fixed to the hinge shaft 40a via the plurality of gears 121, 122, 123 and 131.

The hinge 40 may include the hinge shaft 40a and the hinge gear 40b. In this case, the hinge gear 40b may be securely fixed to the hinge shaft 40a, so that a gear 170 interlocked with the hinge gear 40b may be moved along teeth of the hinge gear 40b and rotated around the hinge shaft 40a when the gears 122 interlocked with the hinge gear 40b are rotated by the power of the driving motor 110. The door opening/closing device 100 and the door 30 may be rotated around the hinge shaft 40a as a rotation axis. The hinge-side gear 170 interlocked with the hinge gear 40b may be referred to as a terminal gear 170.

The door opening/closing device 100 may include a gear assembly 130 arranged between the driving motor 110 and the hinge 40 to intermittently deliver the power of the driving motor 110 to the hinge gear 40b. Furthermore, the door opening/closing device 100 may include the motor-side gears 121 that link the driving motor 110 and the gear assembly 130, and the hinge-side gears 122 that link the gear assembly 130 and the hinge gear 40b. In other words, the motor-side gears 121 and the hinge-side gears 122 may be linked via the gear assembly 130. Furthermore, the gear assembly 130 may control power delivered from the motor-side gears 121 to the hinge-side gears 122.

The gear assembly 130 may include a pair of clutch gears 131 coupled to and revolving around the center gear 123 linked to the driving motor 110 as one of the motor-side gears 121, and a support frame 132 for rotating the clutch gear 131 along the edges of the center gear 123 around a rotation axis of the center gear 123. The clutch gear 131 may correspond to a swing gear interlocked with and revolving around the center gear 123.

The center gear 123 may include a first gear part 123a in the form of a spur gear, and a second gear part 123b in the form of another spur gear with a smaller diameter than the first gear part 123a, and the first gear part 123a and the second gear part 123b may be integrally provided to have the same rotation axis. The center gear 123 may be rotated around the center axis as a rotation axis upon receiving the power of the driving motor 110 from the motor-side gear 121a interlocked with the first gear part 123a.

The rotation axis of the support frame 132 may be the same axis as the rotation axis of the center gear 123. The rotation axis of the support frame 132 may correspond to a revolution axis of the clutch gears 131 that revolve around the center gear 123.

One clutch gear 131 may be mounted at either end of the support frame 132. Specifically, the support frame 132 may include a plate 133 with a through hole 133a formed thereat, and a pair of clutch gear mounting shafts 134 arranged at both ends of the plate 133. The clutch gear mounting shaft 134 goes through the clutch gear 131 so that the clutch gear 131 may be rotationally coupled to the clutch gear mounting shaft 134.

The clutch gears 131 may be interlocked with the center gear 123. Specifically, the clutch gears 131 may be interlocked with the second gear part 123b of the center gear 123. Accordingly, the clutch gear 131 may receive the power of the driving motor 110 from the center gear 123, and may be linked to the driving motor 110 via the center gear 123.

The clutch gear 131 may be intermittently interlocked with one gear 122a of the hinge-side gears 122. Accordingly, the clutch gear 131 may be linked to and engaged with the hinge gear 40b via the hinge-side gears 122.

The support frame 132 may be arranged at one end of the plate 133 and may include the magnet 138 corresponding to the clutch sensor 137. The magnet 138 may be formed with a magnetic material.

The door opening/closing device 100 may include a clutch sensor 137 for detecting a position of the gear assembly 130 to determine whether the motor-side gears 121 and the hinge-side gears 122 are linked. The clutch sensor 137 may detect the position of a magnet 138 by detecting a magnetic field from the magnet 138. For example, the clutch sensor 137 may detect the magnet 138 when approaching the magnet 138 arranged on the gear assembly 130.

The magnet 138 may be moved along with the revolution of the clutch gear 131. A position of the magnet 138 when the door opening/closing device 100 opens the door 30 may be different from a position of the magnet 138 when the door opening/closing device 100 closes the door 30.

The clutch sensor 137 may include a first hall sensor arranged in a position to detect the magnet 138 while the door opening/closing device 10 is opening the door 30, and a second hall sensor arranged in a position to detect the magnet 138 while the door opening/closing device 100 is closing the door 30.

The door opening/closing device 100 may include the lever 150 coming into contact with the front 10a of the housing 10 to push the housing 10 so as to move the door 30 in an opening direction, a slider 140 slidably provided to deliver the power of the driving motor 110 to the lever 150, and an operating frame 160 engaged and rotated with the center gear 123 to pressurize the slider 140 to slide. The lever 150, the slider 140, and the operating frame 160 may be arranged in the case 101.

As shown in FIG. 4, the operating frame 160 may include a disc 161 to support the plate 133 of the support frame 132, an insert shaft 162 protruding from almost the center on a side of the disc 161 to form a rotation axis of the disc 161, and a pressurizing projection 163 protruding from the other side of the disc 161 at a position spaced apart from the rotation axis of the operating frame 160. The pressurizing projection 163 may be symmetrically arranged on the operating frame 160. That is, the pressurizing projection 163 may be provided in a pair.

The insert shaft 162 of the operating frame 160 may protrude upward from the disc 161 to be inserted to the through hole 133a of the support frame 132, and the insert shaft 162 that passes through the through hole 133a of the support frame 132 may then be inserted and fixed to the center gear 123. The insert shaft 162 and the center gear 123 may have the same rotation axis. Accordingly, the operating frame 160 may be coaxially rotated with the center gear 123. The operating frame 160 may be linked to the driving motor 110 via the center gear 123. The center gear 123, the operating frame 160, and the gear assembly 130 may be rotated in the same direction.

The slider 140 may include, as shown in FIGS. 3, an extender 140a extending in the left-right direction, a pressurizer 143 arranged at an end of the extender 140a and pressed by the pressurizing projection 163, and a coupling groove 141 arranged at the other end of the extender 140a for part of the lever 150 to be inserted and coupled to the coupling groove 141.

Furthermore, the slider 140 may include a slider bar 144 having the extender 140a and the coupling groove 141, and an intermittence member 145 rotationally coupled to an end of the slider bar 144 and including the pressurizer 143. The intermittence member 145 may selectively deliver the power of the motor 110 transferred by rotation of the center gear 123 and the operating frame 160 to the slider 140. The intermittence member 145 may include a rotation shaft 146 arranged at one end to be rotationally coupled to the slider bar 144, and the pressurizer 143 arranged at the other end.

The lever 150 may include the pusher 150a contacting the housing 10 at one end, and protruding from the case 101 and pushing the housing 10 to separate the door 30 from the housing 10 when the door 30 is opened, and a body 150b bending and extending from the other end of the pusher 150a and having a rotation shaft 150d formed at one end to be rotationally coupled to the case 101. Specifically, the pusher 150a may contact and push the front 10a of the housing 10, without being limited thereto, and the pusher 150a may contact a different side of the housing 10 or contact a different member fixed to the housing 10.

The lever 150 may include a coupling projection 150c that protrudes from the body 150b to be inserted and coupled to the coupling groove 141 of the slider 140 at one end and inserted to a guide groove 101a formed at the case 101 at the other end, making a guided motion. Specifically, the coupling projection 150c may be formed to protrude upward and downward from the body 150b of the lever 150 at a distance from the rotation shaft 150d of the lever 150. The pusher 150a, the body 150b, and the coupling projection 150c may be integrally formed.

The slider 140 may slide as the pressurizer 143 is pressurized by the pressurizing projection 163 of the operating frame 160 rotated by receiving the power of the driving motor 110, and the sliding slider 140 may enable the lever 150 to push the housing 10 for the door 30 to be separated from the housing 10.

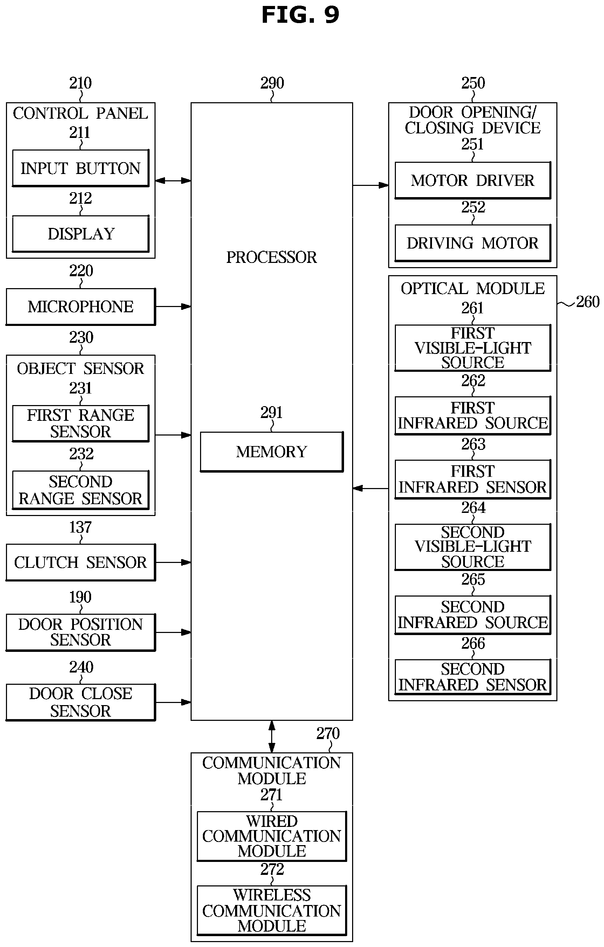

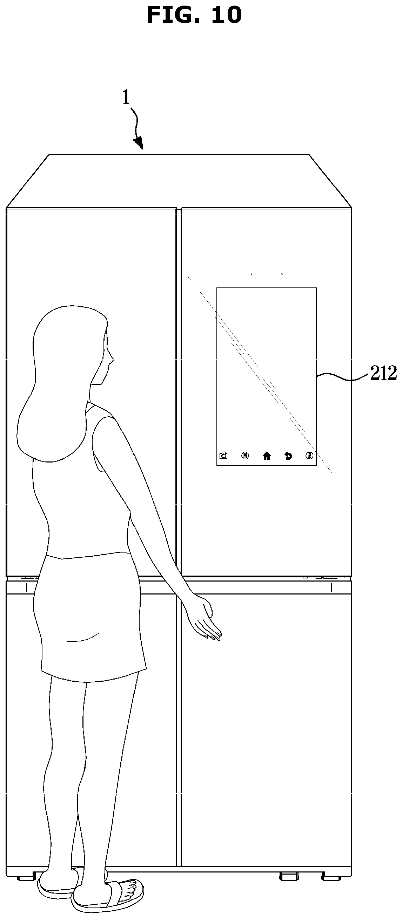

The door opening/closing device 100 may include a door position sensor 190 that is able to detect a rotation angle and/or position of the terminal gear 170 (see FIGS. 9 and 10). The door position sensor 190 may be electrically connected to a printed circuit board (PCB) 193. The door position sensor 190 may be mounted on the PCB 193 arranged under the terminal gear 170.

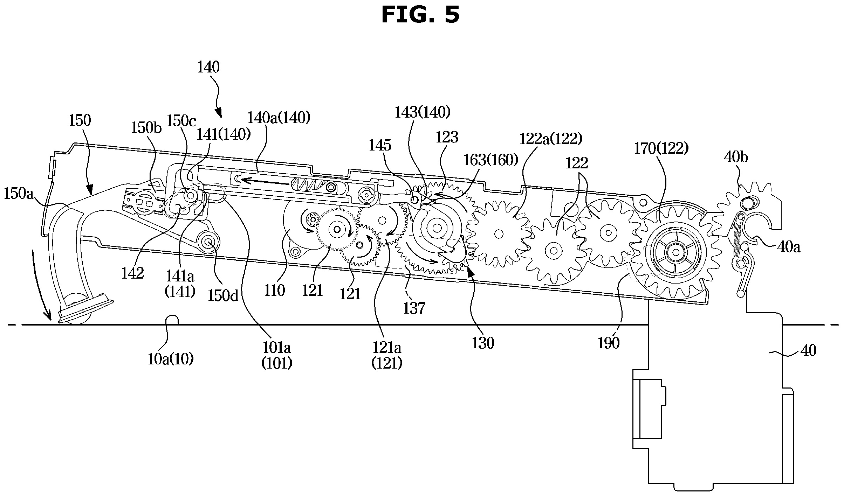

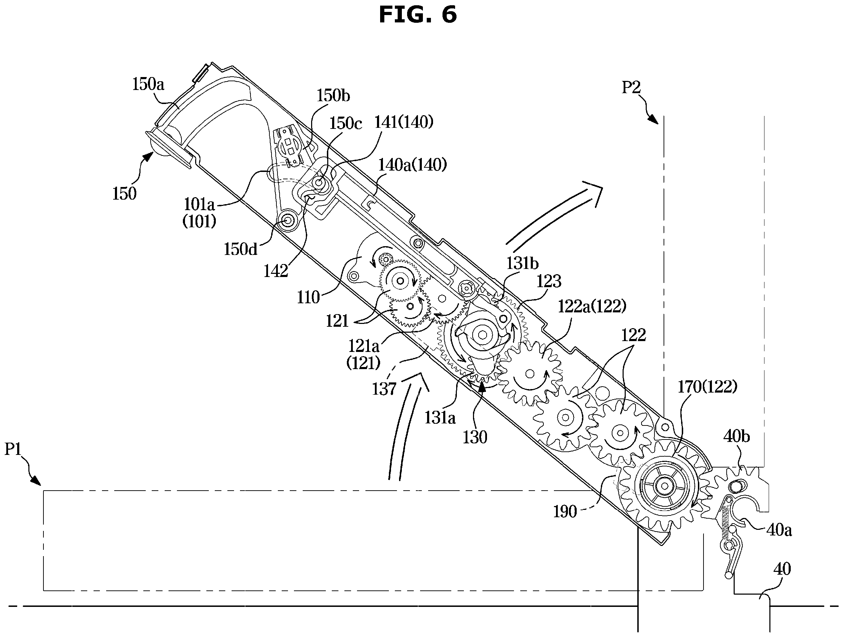

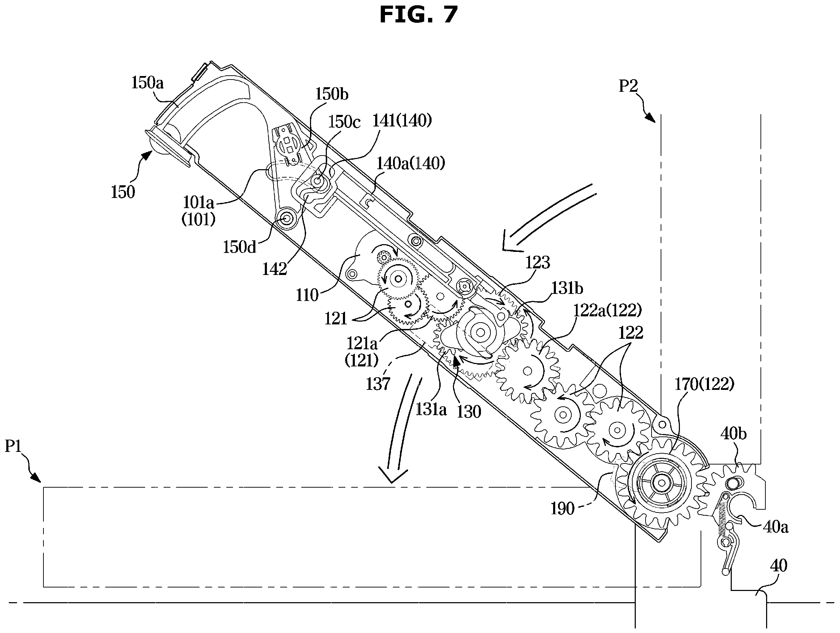

FIG. 5 illustrates an example of a door starting to be opened by a door opening/closing device, according to an embodiment. FIG. 6 illustrates an example of a door being opened by a door opening/closing device, according to an embodiment. FIG. 7 illustrates an example of a door being closed by a door opening/closing device, according to an embodiment.

When the pressurizer 143 is not pressurized by the pressurizing projection 163, as shown in FIG. 3, the lever 150 is in a state of being accommodated in the case 110 and does not push the housing 10. Referring to FIG. 5, when the pressurizer 143 is pressurized by the pressurizing projection 163, the slider 140 may slide toward the lever 150, the inner surface of the coupling groove 141 of the slider 140 may pressurize the coupling projection 150c, and the lever 150 may be guided by the guide groove 101a to be moved and rotated around the rotation axis 150d according to the force applied to the coupling projection 150c.

As such, when the slider 140 slid by the pressurizing projection 163 pushes the coupling projection 150c of the lever 150 to rotate the lever 150, the pusher 150a of the lever 150 may protrude outward from the case 101 through the opening 101b of the case 101, pushing the front 10a of the housing 10 to separate the door 30 from the housing 10.

Referring to FIGS. 5 to 7, the door 30 may be rotated by the driving motor 110 of the door opening/closing device 100 coupled to the top end and/or bottom end of the door 30. The door 30 may be rotated in a first direction when the driving motor 110 is rotated in the first direction, and the door 30 may be rotated in a second direction when the driving motor 110 is rotated in the second direction. It is not, however, limited thereto, and according to the number of the hinge-side gears 122 and the number of the motor-side gears 121, the door 30 may be rotated in the second direction when the driving motor 110 is rotated in the first direction, and the door 30 may be rotated in the first direction when the driving motor 110 is rotated in the second direction.

In the following description, it is assumed that based on FIGS. 5 to 7 illustrating the door opening/closing device 100 viewed from below, the door 30 is rotated in the opening direction when the driving motor 110 is rotated in the first direction, e.g., counterclockwise when the door opening/closing device 100 is viewed from below and the door 30 is rotated in the closing direction when the driving motor 110 is rotated in the second direction, e.g., clockwise when the door opening/closing device 100 is viewed from below.

A rotation direction and velocity of the driving motor 110 may be controlled by a processor 290 (see FIG. 9). The door opening/closing device 100 may directly or indirectly receive a control signal sent from the processor 290. Furthermore, the processor 290 may receive a detection signal transmitted by the clutch sensor 137 when the clutch sensor 137 detects the magnet 138, and control rotation of the driving motor 110 based on the detection signal.

The door 30 may be moved by the door opening/closing device 100 into an open position P2 at which to automatically open the storeroom 20. The open position P2 may correspond to a position where the door 30 is positioned when the door 30 is rotated by a preset angle to a direction in which the storeroom 20 is opened from a close position P1 at which the storeroom 20 is closed. In other words, the door 30 may be switched into a state of opening the storeroom 20 by moving to the open position P2 from a closed state of the storeroom 20. The open position P2 is not limited to what are illustrated in FIGS. 5 to 7.

When the door 30 is in the close position P1, the gear assembly 130 may be in a neutral position. The neutral position may correspond to a position where the first and second clutch gears 131a and 131b of the gear assembly 130 are interlocked with the center gear 123 but not interlocked with the hinge-side gear 122b.

When the gear assembly 130 is in the neutral position, the magnet 138 is positioned between the first and second hall sensors of the clutch sensor 137 and is not detected by the clutch sensor 137.

The door opening/closing device 100 may receive the open signal from the processor 290 to rotate the door 30 from the close position P1 into the open position P2.

Upon receiving the open signal from the processor 290, the door opening/closing device 100 may rotate the driving motor 110 in the first direction. The power of the driving motor 110 may be delivered to the motor-side gears 121, and the motor-side gear 121a interlocked with the center gear 123 may deliver the power of the driving motor 110 to the center gear 123. Accordingly, the center gear 123 may be rotated by receiving the driving power of the driving motor 110.

After the door 30 is separated from the housing 10 by the lever 150, the driving motor 110 may be constantly rotated in the first direction. With the rotation of the driving motor 110, the gear assembly 130 may be moved from the neutral position to an interlocking position.

Specifically, with the rotation of the center gear 123, the pair of clutch gears 131 revolves around the center gear 123, in which case one of the pair of clutch gears 131 may be interlocked and engaged with one 122a of the hinge-side gears.

The interlocking position may include a first interlocking position where the first clutch gear 131a of the gear assembly 130 is interlocked with the center gear 123 and the hinge-side gears 122, and a second interlocking position where the second clutch gear 131b of the gear assembly 130 is interlocked with the center gear 123 and the hinge-side gears 122.

Referring to FIG. 6, when the driving motor 110 is rotated in the first direction according to the open signal from the processor 290 (see FIG. 9), the first clutch gear 131a may be interlocked with the center gear 123 and the hinge-side gear 122a. In other words, while the door 30 is being opened, the first clutch gear 131a may deliver the power to the hinge-side gear 122a.

While the first clutch gear 131a is interlocked with the hinge-side gear 122a, the first hall sensor of the clutch sensor 137 may detect the magnet 138, and the clutch sensor 137 may send a signal corresponding to the first interlocking position of the gear assembly 130 to the processor 290.

The gear assembly 130 in the first interlocking position may deliver the power of the driving motor 110 rotated in the first direction to the hinge-side gears 122. The hinge-side gears 122 may deliver the power of the driving motor 110 to the hinge gear 40b. The hinge-side gear 170 interlocked with the hinge gear 40b may be turned around the hinge gear 40b fixed to the hinge shaft 40a. Accordingly, the door 30 may be rotated around the hinge shaft 40a toward the open position P2. The driving motor 110 may be rotated in the first direction until the door 30 is in the open position P2.

When the door 30 reaches the open position P2, the processor 290 may control the driving motor 110 to place the gear assembly 130 into the neutral position. The processor 290 may rotate the driving motor 110 in the second direction.

After completion of rotation of the door 30 into the open position P2, the first clutch gear 131a may be disengaged from the hinge-side gear 170. This may prevent the driving motor 110 from being linked to the hinger gear 40b and serving as a resistor when the door 30 is manually closed by the user, so the user may smoothly rotate the door 30 from the open position P2 into the close position P1.

Referring to FIG. 7, the door opening/closing device 100 may receive a control signal from the processor 290 to rotate the door 30 from the open position P2 into the close position P1.

Upon receiving the close signal from the processor 290, the door opening/closing device 100 may rotate the driving motor 110 in the second direction. The power of the driving motor 110 may be delivered to the motor-side gears 121, and the motor-side gear 121a interlocked with the center gear 123 may deliver the power of the driving motor 110 to the center gear 123.

The driving motor 110 may be constantly rotated in the second direction. With the rotation of the driving motor 110, the gear assembly 130 may be moved from the neutral position to a second interlocking position.

When the driving motor 110 is rotated in the second direction according to the close signal from the processor 290, the second clutch gear 131b may be interlocked with the center gear 123 and the hinge-side gear 122a, and the first clutch gear 131a may be interlocked only with the center gear 123 and not with the other gears. Specifically, while the door 30 is being closed, the second clutch gear 131b may deliver the power to the hinge-side gear 122a.

While the second clutch gear 131b is interlocked with the hinge-side gear 122a, the second hall sensor of the clutch sensor 137 may detect the magnet 138, and the clutch sensor 137 may send a signal corresponding to the second interlocking position of the gear assembly 130 to the processor 290.

The gear assembly 130 in the second interlocking position may deliver the power of the driving motor 110 rotated in the second direction to the hinge-side gears 122. The hinge-side gears 122 may deliver the power of the driving motor 110 to the hinge gear 40b. The hinge-side gear 170 interlocked with the hinge gear 40b may be turned around the hinge gear 40b fixed to the hinge shaft 40a. Accordingly, the door 30 may be rotated around the hinge shaft 40a toward the close position P1. The driving motor 110 may be rotated in the second direction until the door 30 is in the close position P1.

When the door 30 reaches the close position P1, the processor 290 may control the driving motor 110 to place the gear assembly 130 into the neutral position. The processor 290 may rotate the driving motor 110 in the first direction.

The door position sensor 190 may detect a rotation angle or a position of the door 30 and/or the terminal gear 170.

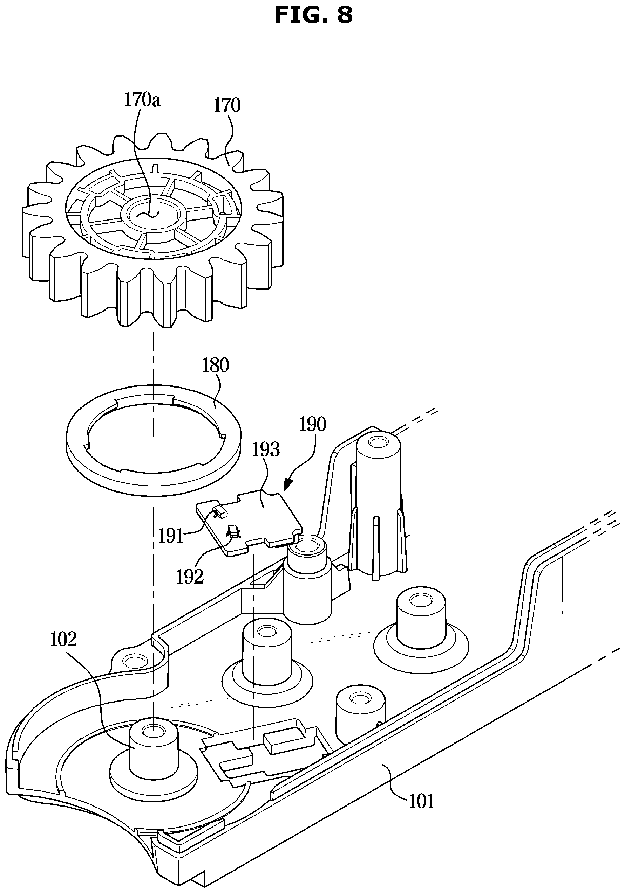

FIG. 8 is an exploded view of part of a door opening/closing device, according to an embodiment of the disclosure.

Referring to FIG. 8, the door opening/closing device 100 may include the hinge-side gears 122 having the terminal gear 170, a magnet 180, the door position sensor 190, and a boss 102.

The terminal gear 170 may receive power from the driving motor 110.

The magnet 180 may be received inside the terminal gear 170. The magnet 180 may interact with the door position sensor 190 so that an angle by which the terminal gear 170 is rotated may be detected. The magnet 180 may be shaped like a ring. N poles and S poles may be alternately arranged along the circumference of the magnet 180. The magnet 180 may be arranged opposite the door position sensor 190. Although the position of the terminal gear 170 is described as being detected by interaction between the magnet 180 and the door position sensor 190, it is not limited thereto. For example, the door position sensor 190 may detect the position of the terminal gear 170 for itself without the magnet 180.

The door position sensor 190 may be arranged near the magnet 180. The door position sensor 190 may be arranged on a side to the magnet 180. For example, the door position sensor 190 may be arranged under the magnet 180.

The door position sensor 190 may detect a change in position and/or angle of the terminal gear 170 and the door by detecting a polarity change of the magnet 180.

The door position sensor 190 may include a first position sensor 191, a second position sensor 192, and the PCB 193. The first and second position sensors 191 and 192 may include various sensors such as hall sensors, light sensors, etc., for detecting a position and/or angle of the terminal gear 170.

The boss 102 may protrude inward from the case 101. The boss 102 may be coupled with each of the plurality of gears 121, 122, 123 and 131 of the door opening/closing device 100.

As the magnet 180 is received in the terminal gear 170, the magnet 180 may also be rotated when the terminal gear 170 is rotated by receiving power. In this case, the door position sensor 190 may detect a change in the N poles and the S poles of the magnet 180, and based on the detected change, may detect a rotated angle of the terminal gear 170 and/or the magnet 180.

FIG. 9 illustrates a configuration of a refrigerator, according to an embodiment.

Referring to FIG. 9, the refrigerator 1 may include a control panel 210, a microphone 220, an object sensor 230, the door position sensor 190, the clutch sensor 137, a door close sensor 240, a door opening/closing device 250, an optical module 260, a communication module 270 and/or the processor 290.

The control panel 210, the microphone 220, the object sensor 230, the door position sensor 190, the clutch sensor 137, the door close sensor 240, the door opening/closing device 250, the optical module 260, the communication module 270 and/or the processor 290 may not be essential components of the refrigerator 1, and it is possible to omit at least some of the components.

The clutch sensor 137 may be the same clutch sensor as shown in FIG. 3. The clutch sensor 137 may provide a signal that indicates a position (e.g., the neutral position, the first interlocking position or the second interlocking position) of the gear assembly 130 to the processor 290.

The control panel 210 may provide the user with a user interface to interact with the user. The control panel 210 may be arranged on the housing 10 or on the door 30.

The control panel 210 may include an input button 211 and/or a display 212. The input button 211 and the display 212 are not essential components of the control panel 210, and it is possible to omit at least some of the components.

The input button 211 may obtain a user input related to an operation of the refrigerator 1. For example, the input button 211 may obtain a user input (or user command) to open the door 30. For example, the input button 211 may obtain a target refrigeration temperature to control the temperature of the first storeroom 21 or obtain a target freezing temperature to control the temperature of the second storeroom 22.

The input button 211 may provide an electric signal or a user input signal (e.g., a voltage signal or a current signal) corresponding to the user input to the processor 290. The processor 290 may identify the user input based on a result of processing the user input signal.

The input button 211 may include a tact switch, a push switch, a slide switch, a toggle switch, a micro switch, or a touch switch.

The display 212 may obtain information about an operation of the refrigerator 1 from the processor 290 and display the information about the operation of the refrigerator 1. For example, the display 212 may display opening or closing of the door 30. The display 212 may also display a temperature measured in the first storeroom 21 or the second storeroom 22.

Furthermore, the display 212 may display the user input obtained in association with the operation of the refrigerator 1. For example, the display 212 may display a user input to open the door 30. The display 212 may also display the target refrigeration temperature for the first storeroom 21 or the target freezing temperature for the second storeroom 22 obtained by the input button 111.

The display 212 may include, for example, a liquid crystal display (LCD) panel, a light emitting diode (LED) panel, or the like.

The display 212 may include e.g., a touch screen. The touch screen may be located on the front of the display 212. The touch screen may receive a touch input of the user and output an electric signal corresponding to the received touch input to the processor 290. The processor 290 may identify coordinates of the touch input based on the electric signal of the touch screen and identify the user input of the user based on the coordinates of the touch input.

The microphone 220 may obtain a sound wave (e.g., voice or sound) and convert the sound wave into an electric signal or a voice signal (e.g., a current signal or a voltage signal). For example, the microphone 220 may obtain voice of the user and convert the voice into an electric signal.

The microphone 220 may provide the converted electric signal (voice signal) to the processor 290. The processor 290 may identify a user input by voice based on a result of processing the voice signal.

The object sensor 230 may identify whether there is an object (e.g., a user) located around the refrigerator 1 and identify a distance to the object. For example, the object sensor 230 may identify whether there is a user located in front of the refrigerator 1 (e.g., in front of the door 30) and identify a distance to the user. Using the object sensor 230, the user may open the door 30 through a motion without the need for applying force to the door 30 to open the door 30.

The object sensor 230 may include e.g., a first range sensor 231 and a second range sensor 232. The first range sensor 231 and the second range sensor 232 may include at least one of e.g., an infrared sensor, a light detection and ranging (LIDAR) sensor, an ultrasonic sensor, or a radar sensor. The first range sensor 231 and the second range sensor 232 are not essential components of the object sensor 230, and at least some of the components may be omitted.

The first range sensor 231 may be installed on one side of the door 30. The first range sensor 231 may transmit at least one of infrared rays, ultrasonic waves or radio waves forward from the refrigerator 1, or receive at least one of infrared rays, ultrasonic waves or radio waves reflected from an object (e.g., a user) located in front of the refrigerator 1.

For example, the first range sensor 231 may identify a distance between the first range sensor 231 and the object based on intensity of at least one of the received infrared rays, ultrasonic waves or radio waves. In another example, the first range sensor 231 may identify a distance between the first range sensor 231 and the object based on a difference (or difference in phase) between transmission time of at least one of the received infrared rays, ultrasonic waves or radio waves and reception time of at least one of the received infrared rays, ultrasonic waves or radio waves.

The first range sensor 231 may provide first distance data corresponding to the distance between the first range sensor 231 and the object to the processor 290.

The second range sensor 232 may be installed on e.g., the other side of the door 30. The second range sensor 232 may transmit at least one of infrared rays, ultrasonic waves or radio waves forward from the refrigerator 1, or receive at least one of infrared rays, ultrasonic waves or radio waves reflected from an object (e.g., a user) located in front of the refrigerator 1.

For example, the second range sensor 232 may be substantially the same as the first range sensor 231 and may provide second distance data corresponding to a distance between the second range sensor 231 and the object to the processor 290.

The processor 290 may identify whether there is an object (e.g., a user) located in front of the refrigerator 1 and/or a distance to the object based on the first distance data and/or the second distance data.

The first range sensor 231 and the second range sensor 232 may be installed at lower ends of the left and right doors 30, respectively. For example, the first distance sensor 231 may be arranged at the lower end of the left door and the second distance sensor 232 may be arranged at the lower end of the right door. However, the number and positions of the range sensors 231 and 232 are not limited to what are described above.

The door position sensor 190 may provide a signal that indicates a rotated angle of the door 30 to the processor 290. The door position sensor 190 may be the same door position sensor described above in connection with FIG. 8.

The processor 290 may identify rotation of the magnet 180 and a rotation direction based on an output signal from the first position sensor 191 and an output signal from the second position sensor 192. Furthermore, the processor 290 may identify an open angle or closed angle of the door 30.

The door close sensor 240 may detect a closed state of the door 30, and provide an electric signal (a door close signal) corresponding to the closed state of the door 30 to the processor 290. For example, the door close sensor 240 may include a micro switch or a reed switch.

The door opening/closing device 250 may be identical to the aforementioned door opening/closing device 100 (see FIGS. 2 to 8).

The door opening/closing device 250 may automatically open or close the door 30 under the control of the processor 290.

The door opening/closing device 250 may include a motor drive 251 and a driving motor 252. Furthermore, the door opening/closing device 250 may further include a plurality of gears that deliver the rotation of the driving motor 252 to the hinge of the refrigerator 1. The motor drive 251 and the driving motor 252 are not essential components of the door opening/closing device 250, and it is possible to omit at least some of the components.

The motor drive 251 may receive a target velocity command or a torque command from the processor 290, and provide a driving current corresponding to the target velocity command or the target torque command to the driving motor 252. For example, the motor drive 251 may apply a pulse-width-modulated (PWMed) driving voltage to the driving motor 252 to provide a driving current to the driving motor 252.

For example, the motor drive 251 may control the driving current to be provided to the driving motor 252 based on a difference between the target velocity and a measured velocity of the driving motor 252. The motor drive 251 may increase a duty cycle of the PWMed driving voltage to increase the driving current in response to the measured velocity of the driving motor 252 being lower than the target velocity. Furthermore, the motor drive 251 may reduce the duty cycle of the PWMed driving voltage to reduce the driving current in response to the measured velocity of the driving motor 252 higher than the target velocity.

The motor drive 251 may control the duty cycle of the PWMed driving voltage based on target torque. For example, the motor drive 251 may apply a driving voltage of 100% duty cycle to the driving motor 110 upon reception of a maximum torque command from the processor 290.

Furthermore, the motor drive 251 may provide information about rotation of the driving motor 252 to the processor 290 in response to a target velocity command or torque command from the processor 290. For example, the motor drive 251 may provide information about a driving current applied to the driving motor 252 or information about rotation velocity of the driving motor 252 to the processor 290.

The driving motor 252 may be identical to the aforementioned driving motor 110 (in FIGS. 2 to 8).

The driving motor 252 may produce torque to open or close the door 30.

The driving motor 252 may include a stator fixed to the door opening/closing device 250 and a rotor arranged to be rotated against the stator. The rotor may be connected to a rotation shaft of the driving motor 252. The rotor may be rotated through magnetic interaction with the stator, and the rotation of the rotor may be delivered to the plurality of gears through the rotation shaft.

The driving motor 252 may include, for example, a brushless direct current motor (BLDC motor) or a permanent synchronous motor (PMSM) capable of easily controlling the rotation velocity.

The optical module 260 may use infrared to detect a gesture of the user, and provide data about the gesture of the user to the processor 290.

The optical module 260 may include a first visible-light source 261, a first infrared source 262, a first infrared sensor 263, a second visible-light source 264, a second infrared source 265 and/or a second infrared sensor 266. The first visible-light source 261, the first infrared source 262, the first infrared sensor 263, the second visible-light source 264, the second infrared source 265 and the second infrared sensor 266 are not essential components of the optical module 260, and it is possible to omit at least some of the components.

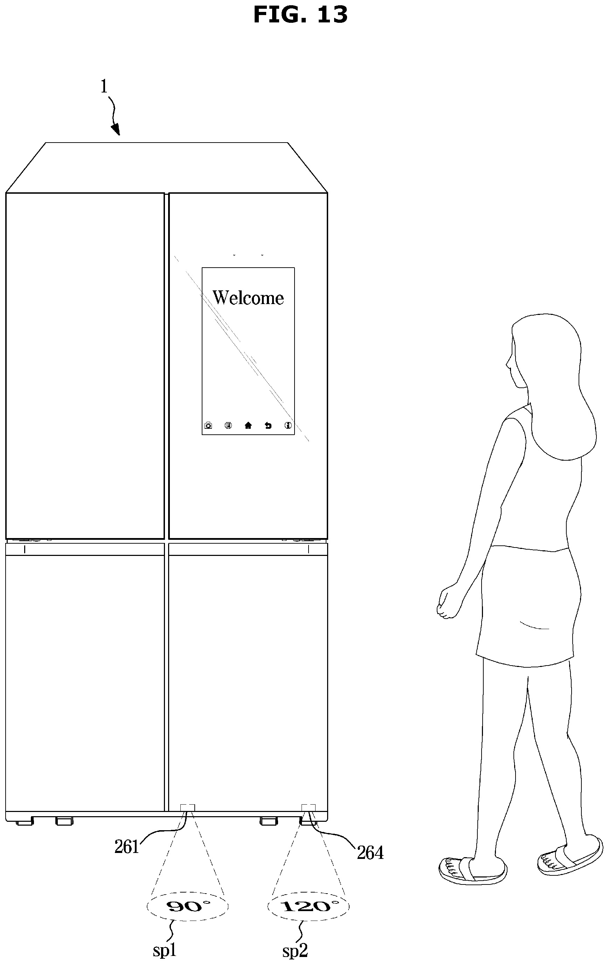

The first visible-light source 261 and the first infrared source 262 may irradiate visible rays and infrared rays, respectively, toward the floor on which the refrigerator 1 is installed. As shown in FIG. 13, the visible rays irradiated by the first visible-light source 261 may form a first visible-light spot SP1 on the floor, and the infrared rays irradiated by the first infrared source 262 may form a first infrared spot on the floor. The first visible-light spot SP1 may be visibly recognized by the user, and at least a portion of the first visible-light spot SP1 may overlap the first infrared spot. Furthermore, the first visible-light spot SP1 may include a number, a letter or a symbol that represents a first target angle of the door 30. For example, the first visible-light spot SP1 may include a number and a symbol, "90°".

The first infrared sensor 263 may be installed adj acent to the first infrared source 262 to detect an infrared ray and identify intensity of the infrared ray. Furthermore, when detecting an infrared ray with a preset intensity or higher, the first infrared sensor 263 may provide an electrical signal (a first infrared detection signal) corresponding to the detection of the infrared ray to the processor 290.

The first infrared sensor 263 may detect an infrared ray of sunlight and an infrared ray irradiated from the first infrared source 262 and reflected off the floor. In this case, intensities of the infrared ray of the sunlight and the infrared ray reflected from the floor are lower than the preset intensity.

When an object (e.g., the user's body) is positioned in an irradiation path of the first infrared source 262, the infrared ray may be reflected from the object. The first infrared sensor 263 may detect the infrared ray reflected from the object, and the intensity of the infrared ray reflected from the obj ect nearer than the floor is higher than the intensity of the infrared ray reflected from the floor. Especially, the intensity of the infrared ray reflected from the object nearer than the floor may be higher than the preset intensity.

Accordingly, the first infrared sensor 263 that detects the infrared ray reflected from the object nearer than the floor may send a first infrared detection signal corresponding to the detection of the infrared ray to the processor 290.

The processor 290 may identify that an object (e.g., the user's body) is positioned between the first infrared source 262 and the floor (e.g., the first infrared spot or the first visible-light spot) based on the first infrared detection signal received from the first infrared sensor 263.

The second visible-light source 264 and the second infrared source 265 may irradiate visible rays and infrared rays, respectively, toward the floor on which the refrigerator 2 is installed. The visible rays irradiated by the second visible-light source 264 may form a second visible-light spot SP2 on the floor, and the infrared rays irradiated by the second infrared source 265 may form a second infrared spot on the floor. The second visible-light spot SP2 may be visibly recognized by the user, and at least a portion of the second visible-light spot SP2 may overlap the second infrared spot. The second visible-light spot SP2 does not overlap the first visible-light spot SP1 nor the first infrared spot. The second infrared spot does not overlap the first visible-light spot SP1 nor the first infrared spot. Furthermore, the second visible-light spot SP2 may include a number, a letter or a symbol that represents a second target angle of the door 30. For example, the second visible-light spot SP2 may include a number and a symbol, "120°".

The second infrared sensor 266 may be installed adjacent to the second infrared source 265 to detect an infrared ray and identify intensity of the infrared ray. Furthermore, when detecting an infrared ray with a preset intensity or higher, the second infrared sensor 266 may provide an electrical signal (a second infrared detection signal) corresponding to the detection of the infrared ray to the processor 290.

When an object (e.g., the user's body) is positioned in an irradiation path of the second infrared source 265, the infrared ray may be reflected from the object. The second infrared sensor 266 may detect the infrared ray reflected from the object, and the intensity of the infrared ray reflected from an object nearer than the floor is higher than the intensity of the infrared ray reflected from the floor. Especially, the intensity of the infrared ray reflected from the object nearer than the floor may be higher than the preset intensity.

Accordingly, the second infrared sensor 266 that detects the infrared ray reflected from the object nearer than the floor may send a second infrared detection signal corresponding to the detection of the infrared ray to the processor 290.

The processor 290 may identify that an object (e.g., the user's body) is positioned between the second infrared source 265 and the floor (e.g., the second infrared spot or the second visible-light spot) based on the second infrared detection signal received from the second infrared sensor 266.

The communication module 270 may exchange data with external devices such as a server device and/or a user equipment.

The communication module 270 may include a wired communication module for wiredly exchanging data with the external devices and a wireless communication module 270 for wirelessly exchanging data with the external devices.

The wired communication module 270 may access a wired communication network and communicate with the external devices over the wired communication network. For example, the wired communication module 182 may access the wired communication network through Ethernet, the IEEE 802.3 technology standard, and receive data from external devices over the wired communication network.

The wireless communication module 270 may communicate wirelessly with a base station or an access point (AP), and access the wired communication network via the base station or the AP. The wireless communication module 270 may communicate with the external devices connected to the wired communication network via the base station or the AP. For example, the wireless communication module 270 may use wireless fidelity (Wi-Fi) (the IEEE 802.11 technology standard), to communicate with an AP, or use code divisional multiple access (CDMA), wideband code division multiple access (WCDMA), Global Systems for Mobile communications (GSM), Long Term Evolution (LTE), WiBro, etc., to communicate with a base station. The wireless communication module 270 may receive data from the external devices via the base station or the AP.

In addition, the wireless communication module 270 may communicate directly with the external device. For example, the wireless communication module 270 may use Wi-Fi, Bluetooth, which is the IEEE 802.15.1 technology standard, ZigBee, which is the IEEE 802.15.4 technology standard, etc., to wirelessly receive data from the external devices.

As such, the communication module 270 may exchange data with the external devices, and output communication data received from the external devices to the processor 290.

The processor 290 may be mounted on a printed circuit board (PCB) arranged inside the door 30 or a PCB arranged in the housing 10.

The processor 290 may be electrically connected to the control panel 210, the microphone 220, the object sensor 230, the door position sensor 190, the door close sensor 240, the door opening/closing device 250, the optical module 260 and/or the communication module 270.

The processor 290 may process an output signal of the control panel 210, the microphone 220, the object sensor 230, the door position sensor 190, the door close sensor 240, the optical module 260 and/or the communication module 270, and output a control signal to control the door opening/closing device 250.

The processor 290 may include a memory 291 for storing a program (or a plurality of instructions) or data for processing signals and providing control signals. For example, the memory 291 may include a volatile memory, such as a static random access memory (S-RAM), a dynamic RAM (D-RAM), or the like, and a non-volatile memory, such as a read only memory (ROM), an erasable programmable ROM (EPROM) or the like. The memory 291 may be integrated with the processor 290 or provided as a semiconductor device separated from the processor 290.

The processor 290 may process a signal based on the program or data stored in the memory 291, and may further include a processor core (e.g., an operation circuit, a storage circuit, and a control circuit) that outputs a control signal.

The processor 290 may identify a user input to open the door 30 or a user input to close the door 30 based on an output signal of the control panel 210, the microphone 220, the object sensor 230 and/or the optical module 260. Furthermore, the processor 290 may set a target angle for the door 30 to be opened, based on a user input.

First, the processor 290 may process first distance data and second distance data from the object sensor 230, and identify whether there is a user in front of the refrigerator 1 and/or a distance to the user in front.

For example, the processor 290 may identify a relative position of the user by using trilateration. The processor 290 may identify the relative position of the user based on a set distance between the first range sensor 231 and the second range sensor 232, a first distance based on the first distance data and a second distance based on the second distance data.

The processor 290 may control the display 212 to display an image, activate voice recognition to identify a voice of the user, or control the optical module 260 to form visible-light spots and infrared spots, based on whether there is the user in front of the refrigerator 1 and/or a location of the user in front. Furthermore, the processor 290 may control the door opening/closing device 250 to open or close the door 30.

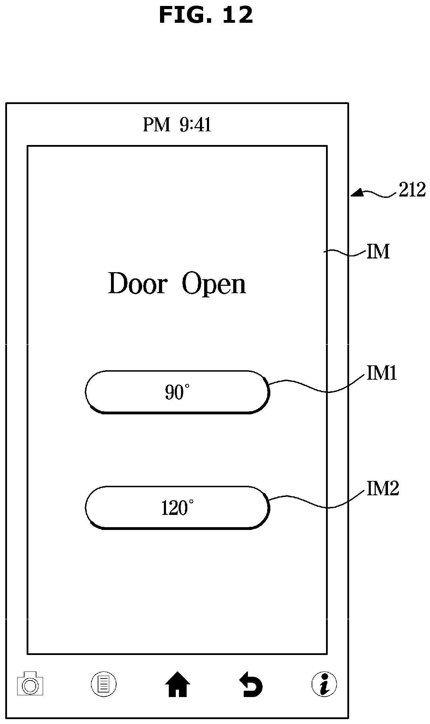

For example, the processor 290 may control the display 212 to display an image when identifying that the user is located in front of the refrigerator 1 as shown in FIG. 12. In other words, when the user is located in front of the refrigerator 1, the touch screen may be activated to display a predefined image on the display 212 and obtain a touch input of the user.

The processor 290 may process a user input signal through the display (e.g., the touch screen) and identify the user input. The processor 290 may identify a user input to open the door 30 or a user input to close the door 30. The processor 290 may control the door opening/closing device 250 to open or close the door 30 based on a touch input signal.

For example, as shown in FIG. 13, the display 212 may obtain a double tap input from the user. The processor 290 may control the door opening/closing device 250 to open the door 30 in response to the double tap input of the user.

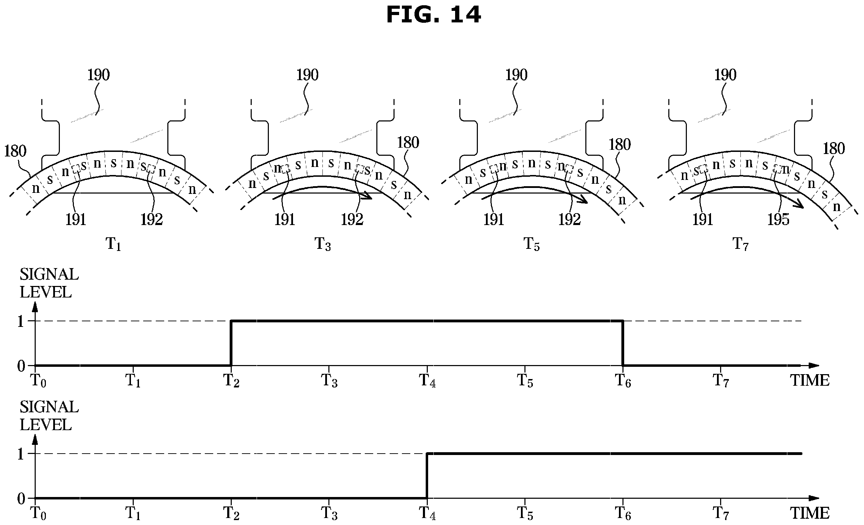

In another example, as shown in FIG. 14, the processor 290 may display an image IM on the display 212 to obtain a target angle to open the door 30. For example, the image IM may include a first image object IM1 to set the target angle to 90° and open the door 30 and a second image object IM2 to set the target angle to 120° and open the door 30. The processor 290 may set the target angle to 90° in response to a touch input on the first image object IM1 and control the door opening/closing device 250 to open the door 30 by 90°. Furthermore, the processor 290 may set the target angle to 120° in response to a touch input on the second image object IM2 and control the door opening/closing device 250 to open the door 30 by 120°.

The processor 290 may process a voice signal from the microphone 220 to identify a user input by voice. The processor 290 may identify a voice to open the door 30 or a voice to close the door 30 based on the voice signal of the microphone 220. The processor 290 may control the door opening/closing device 250 to open or close the door 30.

For example, the microphone 220 may obtain a voice signal intended to open the door. The processor 290 may identify the intention to open the door based on the output signal of the microphone 220. Based on this, the processor 290 may control the door opening/closing device 250 to open the door 30.

In another example, the microphone 220 may obtain a voice signal including a door open angle. The processor 290 may identify a target angle to open the door based on the output signal of the microphone 220. The processor 290 may control the door opening/closing device 250 to open the door 30 by the identified target angle.

The processor 290 may process an output signal of the optical module 260, and identify a user input based on a gesture of the user.

For example, the user may put a body part (e.g., a leg or a foot) close to the first visible-light spot SP1 including a number and symbol, "90°". This may cause an infrared ray irradiated from the first infrared source 262 to be reflected off the body part of the user. The first infrared sensor 263 may detect the infrared ray having intensity higher than the preset intensity, and provide the first infrared detection signal to the processor 290. The processor 290 may identify the user input that sets the target angle to 90° based on the first infrared detection signal. Furthermore, the processor 290 may control the door opening/closing device 250 to open the door 30 by the identified target angle.

In another example, the user may put a body part (e.g., a leg or a foot) close to the second visible-light spot SP2 including a number and symbol, "120°". This may cause an infrared ray irradiated from the second infrared source 265 to be reflected off the body part of the user. The second infrared sensor 266 may detect the infrared ray having intensity higher than the preset intensity, and provide the second infrared detection signal to the processor 290. The processor 290 may identify the user input that sets the target angle to 120° based on the second infrared detection signal. Furthermore, the processor 290 may control the door opening/closing device 250 to open the door 30 by the identified target angle.

The processor 290 may process a communication signal of the communication module 270 and identify a user input through the user equipment.

For example, the user may input an input to set the target angle to 90° to the user equipment. The user equipment may transmit a communication signal corresponding to the user input to the communication module 270 of the refrigerator 1. The processor 290 may obtain the user input to set the target angle to 90° through the communication module 270, and set the target angle of the door 30 to 90°.

The processor 290 may identify a current open angle of the door 30 based on an output signal of the door position sensor 190.

The processor 290 may process the output signal of the door position sensor 190, and identify an angle of the door 30 (e.g., a door open angle, i.e., an angle between a direction pointed by the closed door and a direction pointed by the open door). Furthermore, the processor 290 may identify a direction in which the door 31 is rotated (i.e., whether the door is opened or closed).

How the processor 290 identifies the angle of the door 30 based on the output signal of the door position sensor 190 will now be described in detail.

The processor 290 may control the motor drive 251 to control the velocity of opening the door 301 (i.e., a first directional rotation velocity) based on the angle of the door 30. For example, the processor 290 may control the rotation velocity of the door 30 to naturally open the door 30 to the target angle.

The processor 290 may control the motor drive 251 to control the velocity of closing the door 30 (i.e., a second directional rotation velocity) based on the angle of the door 30. For example, the processor 290 may control the rotation velocity of the door 30 to naturally close the door 30.

The processor 290 may identify obstruction of the door 30 based on a change in angle of the door 30. The processor 290 may control the motor drive 251 to stop rotation of the door 30 in response to the obstruction of the door 30. This may prevent or suppress the motor drive 251 or the driving motor 252 from being overheated to drive the door 30.

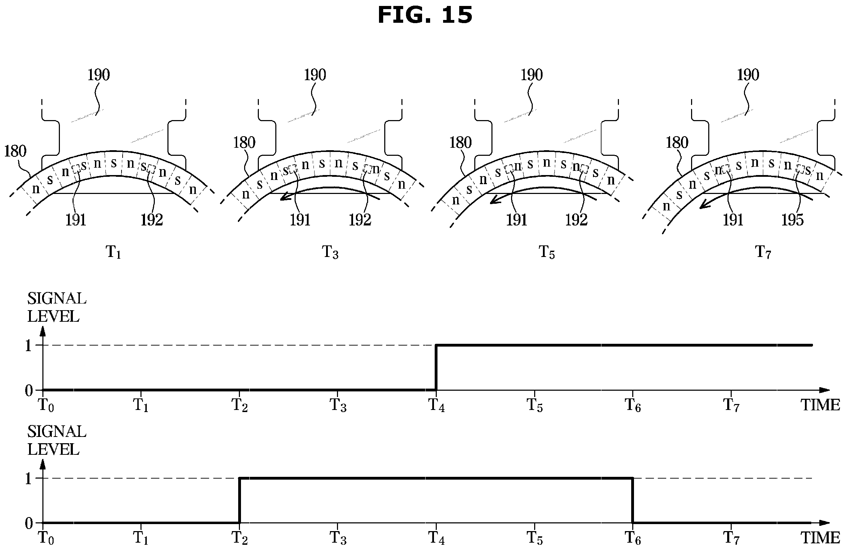

FIGS. 14 and 15 illustrate an example of how a refrigerator identifies a position of a door, according to an embodiment.

The door position sensor 190 may be installed at the door 30 of the refrigerator 1 for detecting rotation of the door 30. For example, the door position sensor 190 may identify rotational displacement and/or rotational direction of the door 30.

The door position sensor 190 may include the first position sensor 191 and/or the second position sensor 192.

For example, each of the first and second position sensors 191 and 192 may include a hall sensor that is able to detect a magnetic field produced from the magnet 180 and/or polarity of the magnetic field. As described above, the magnet 180 may be rotated against the main body of the door 30 when the door 30 is opened or closed. In this case, the magnet 180 may be shaped almost like a ring, and N poles and S poles may be alternately arranged along the circumference of the ring. The first and second position sensors 191 and 192 fixed to the main body of the door 30 may detect a change in magnetic field (e.g., a change in polarity of the magnetic field) caused by rotation of the magnet 180.

The first and second position sensors 191 and 192 may be arranged on substantially the same plane. The first and second position sensors 191 and 192 may be arranged near the magnet 180 so as to detect a magnetic field from the magnet 180.

Each of the first and second position sensors 191 and 192 may provide an electric signal, i.e., a rotation detection signal (e.g., a current signal or a voltage signal) corresponding to the detected polarity of the magnet 180.

For example, each of the first and second position sensors 191 and 192 may provide a signal "0" to the processor 290 based on detection of the S pole of the magnet 180. Furthermore, each of the first and second position sensors 191 and 192 may provide a signal "1" to the processor 290 based on detection of the N pole of the magnet 180.

With the rotation of the magnet on which N poles and S poles are alternately arranged along the circumference, each of the first and second position sensors 191 and 192 may alternately output the signal "0" (a low level signal) and the signal "1" (a high level signal).

As shown in FIG. 14, when the magnet 180 is rotated clockwise with the rotation of the door 30, both the first and second position sensors 191 and 192 may detect a magnetic field from the S pole of the magnet 180 at time T1. At time T1, both the first and second position sensors 191 and 192 may provide the signal "0" to the processor 290.

The magnet 180 may be rotated clockwise. At time T3, the first position sensor 191 may detect a magnetic field from the N pole of the magnet 180 and the second position sensor 192 may detect a magnetic field from the S pole of the magnet 180. At the time T3,the first position sensor 191 may provide the signal "1" to the processor 290, and the second position sensor 192 may provide the signal "0" to the processor 290.

As such, with the rotation of the magnet 180, the output signal of the second position sensor 191 may be changed from the signal "0" to the signal "1". For example, at around time T2, the first position sensor 191 may pass around a border between the S and N poles of the magnet 180, and the output signal of the first position sensor 191 may be changed from the signal "0" to the signal "1".

The magnet 180 may further be rotated clockwise. At time T5, both the first and second position sensors 191 and 192 may detect a magnetic field from the N pole of the magnet 180. At the time T5, both the first and second position sensors 191 and 192 may provide the signal "1" to the processor 290.

As such, with the rotation of the magnet 180, the output signal of the second position sensor 192 may be changed from the signal "0" to the signal "1". For example, at around time T4, the second position sensor 192 may pass around a border between the S and N poles of the magnet 180, and the output signal of the second position sensor 192 may be changed from the signal "0" to the signal "1".

The magnet 180 may further be rotated clockwise. At time T7, the first position sensor 191 may detect a magnetic field from the S pole of the magnet 180 and the second position sensor 192 may detect a magnetic field from the N pole of the magnet 180. At the time T7, the first position sensor 191 may provide the signal "0" to the processor 290, and the second position sensor 192 may provide the high level signal to the processor 290.

As such, with the rotation of the magnet 180, the output signal of the first position sensor 191 may be changed from the signal "1" to the signal "0". For example, at around time T6, the first position sensor 191 may pass around a border between the N and S poles of the magnet 180, and the output signal of the first position sensor 191 may be changed from the signal "1" to the signal "0".

While the magnet 180 is rotated clockwise, a pair of output signals of the first and second position sensors 191 and 192 may be changed in the following sequence: (0, 0), (1, 0), (1, 1), and (0, 1).

The processor 290 may detect rotation of the magnet 180 based on a change in at least one of the output signals of the first and second position sensors 241 and 242. Furthermore, the processor 290 may identify a rotated angle (angular displacement) of the magnet 180 based on the change in at least one of the output signals of the first and second position sensors 241 and 242. In other words, the processor 290 may detect rotation of the door 30 based on a change in at least one of the output signals of the first and second position sensors 241 and 242.

For example, 24 N poles and 24 S poles may be alternately arranged along the circumference of the magnet 180. In other words, 48 poles (N or S poles) may be alternately arranged along the circumference of the magnet 180. One pole may occupy an angle of about 7.5 degrees.

While the output signals of the first and second position sensors 191 and 192 are being changed in the sequence of (0, 0), (1, 0), (1, 1), and (0, 1) in one cycle, the first and second position sensors 191 and 192 may each pass one N pole and one S pole. For example, while the magnet 180 is rotated about 15 degrees, the first and second position sensors 191 and 192 may provide 4 pairs of output signals to the processor 290. In other words, while the door 30 is rotated about 15 degrees, the first and second position sensors 191 and 192 may provide 4 pairs of output signals to the processor 290.

The processor 290 may identify that the door 30 is rotated about 3.75 degrees based on a change in at least one of the output signal of the first position sensor 191 or the output signal of the second position sensor 192.

Furthermore, the processor 290 may identify a rotated angle of the door 30 based on the number of changes in at least one of the output signal of the first position sensor 191 or the output signal of the second position sensor 192.

As shown in FIG. 15, when the magnet 180 is rotated counterclockwise with the rotation of the door 30, both the first and second position sensors 191 and 192 may detect a magnetic field from the S pole of the magnet 180 at time T1, and provide the signal "0" to the processor 290.

At time T3 when the magnet 180 is rotated counterclockwise, the first position sensor 191 may detect a magnetic field from the S pole of the magnet 180 and provide the signal "0" to the processor 290. Furthermore, the second position sensor 192 may detect a magnetic field from the N pole of the magnet 180 and provide a signal "1" to the processor 290.

At time T5 when the magnet 180 is further rotated counterclockwise, both the first and second position sensors 191 and 192 may detect a magnetic field from the N pole of the magnet 180 and provide the signal "1" to the processor 290.

At time T7 when the magnet 180 is rotated counterclockwise, the first position sensor 191 may detect a magnetic field from the N pole of the magnet 180 and provide the signal "1" to the processor 290. Furthermore, the second position sensor 192 may detect a magnetic field from the S pole of the magnet 180 and provide a signal "0" to the processor 290.

While the magnet 180 is rotated counterclockwise, a pair of output signals of the first and second position sensors 191 and 192 may be changed in the following sequence: (0, 0), (0, 1), (1, 1), and (1, 0). As described above, while the magnet 180 is rotated clockwise, a pair of output signals of the first and second position sensors 191 and 192 may be changed in the following sequence: (0, 0), (1, 0), (1, 1), and (0, 1).

As such, while the magnet 180 is rotated clockwise, the output signal of the first position sensor 191 may be changed first and then the output signal of the second position sensor 192 may be changed. On the other hand, while the magnet 180 is rotated counterclockwise, the output signal of the second position sensor 192 may be changed first and then the output signal of the first position sensor 191 may be changed.

In other words, while the magnet 180 is rotated clockwise, the phase of the output signal of the first position sensor 191 may precede the phase of the output signal of the second position sensor 192. Furthermore, while the magnet 180 is rotated counterclockwise, the phase of the output signal of the second position sensor 192 may precede the phase of the output signal of the first position sensor 191.

The processor 290 may identify whether the magnet 180 is rotated clockwise or counterclockwise, based on a change in output signal from the first position sensor 191 and a change in output signal from the second position sensor 192. For example, the processor 290 may identify whether the magnet 180 is rotated clockwise or counterclockwise, based on comparison between the phase of the output signal from the first position sensor 191 and the phase of the output signal from the second position sensor 192.

The processor 290 may identify whether the door 30 is opened or closed based on comparison between the phase of the output signal from the first position sensor 191 and the phase of the output signal from the second position sensor 192.

The processor 290 may identify an angle of the door 30 by accumulating the number of changes in at least one of the output signal from the first position sensor 191 or the output signal of the second position sensor 192 while the door 30 is being opened. Furthermore, the processor 290 may identify an angle of the door 30 by deducting the number of changes in at least one of the output signal from the first position sensor 191 or the output signal of the second position sensor 192 while the door 30 is being closed.

The processor 290 may process an output of the door close sensor 240 and identify that the door 30 is closed. Furthermore, the processor 290 may initialize the angle of the door 30 to 0 degree based on the identifying of the closed state of the door 30. The angle of the door 30 may be defined to be an angle between a direction of the door 30 in the closed state and a direction of the door 30 in the open state. Accordingly, the angle of the door 30 in the closed state may be 0 degree.

As described above, the refrigerator 1 may identify a rotated angle (or open angle) of the door 30 and a rotated angle (or open angle) of the second door 32 by detecting rotation of the magnet 180 on which the N and S poles are alternately arranged along the circumference.

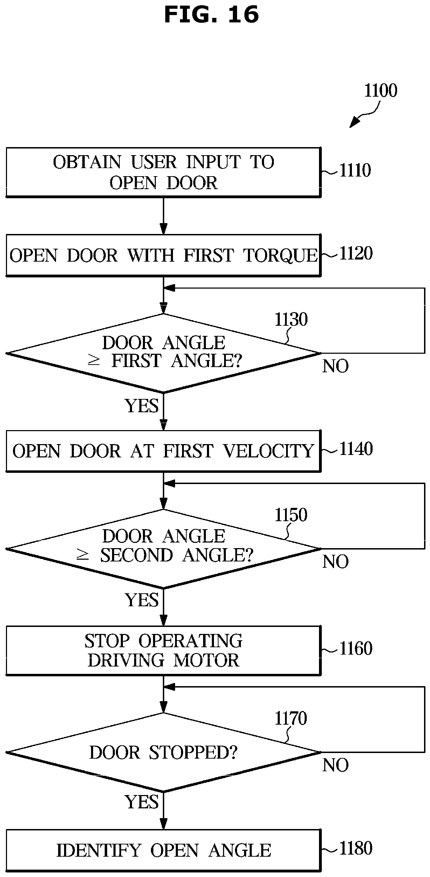

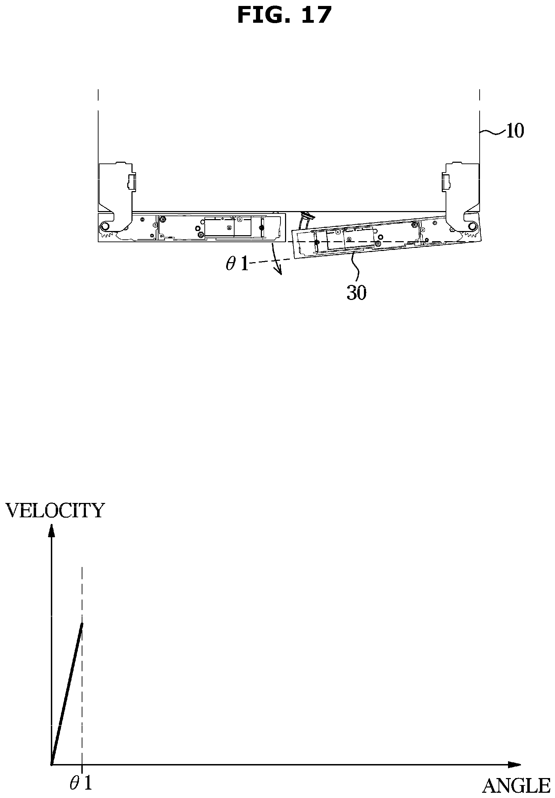

FIG. 16 illustrates how a refrigerator opens a door, according to an embodiment. FIGS. 17, 18 and 19 illustrate an example of a refrigerator controlling door opening velocity according to the method shown in FIG. 16.

In connection with FIGS. 16, 17, 18 and 19, a method 1100 by which the refrigerator 1 opens the door 30 will be described.

The refrigerator 1 may obtain a user input to open the door 30, in 1110.

The processor 290 may identify the user input to open the door 30 based on an output signal received from the control panel 210, the microphone 220 or the optical module 260.

For example, the control panel 210 may obtain the user input to open the door 30 through the input button 211 or the display 212. The processor 290 may identify the user input to open the door 30 based on an output signal of the control panel 210.

For example, the microphone 220 may obtain a user voice to open the door 30 and convert the user voice to an electrical voice signal. The processor 290 may identify the user input to open the door 30 based on the voice signal of the microphone 220. For example, the processor 290 may include a voice recognition engine for identifying a natural language, and use the voice recognition engine to identify the user input to open the door 30.

For example, the optical module 260 may detect a user gesture to open the door 30. At least one of the first infrared sensor 263 and the second infrared sensor 266 included in the optical module 260 may detect an infrared ray reflected from the user's body part, and provide the infrared detection signal to the processor 290 based on the detection of the infrared ray. The processor 290 may identify the user input to open the door 30 based on the infrared detection signal.

The refrigerator 1 may open the door 30 with first torque, in 1120.

The processor 290 may control the motor drive 251 for the driving motor 252 to apply the first torque to the door 30 to open the door 30. For example, the processor 290 may control the motor drive 251 to provide a driving voltage having a duty cycle of substantially 100 % (e.g., a duty cycle of 90 % or more) to the driving motor 252 to open the door 30.

With the first torque (e.g., torque from the driving voltage having a duty cycle of substantially 100 %), the door 30 may overcome a load to maintain the door 30 in the closed state and start to be opened as shown in FIG. 17. Furthermore, the rotation velocity of the door 30 may increase. In other words, the opening of the door 30 may be accelerated.

The refrigerator 1 may identify whether an open angle of the door 30 (e.g., an angle between a direction pointed by the closed door and a direction pointed by the open door) is equal to or larger than a first angle Θ1 while the door 30 is being opened, in 1130.

The processor 290 may obtain an output signal of the door position sensor 190 while the door 30 is being opened. For example, the processor 290 may obtain a pair of output signals of the first and second position sensors 191 and 192 while the door 30 is being opened. Furthermore, the processor 290 may identify whether the door 30 is being opened based on comparison between the phase of the output signal of the first position sensor 191 and the phase of the output signal of the second position sensor 192.

The processor 290 may identify an angle of the door 30 based on the output signal of the door position sensor 190. For example, the processor 290 may identify a rotated angle of the door 30 based on the accumulated or deducted number of changes in at least one of the output signals of the first and second position sensors 191 and 192 (e.g., 3.75-degree rotation * the number of changes in at least one output signal). The processor 290 may identify an open angle of the door 30 by accumulating rotated angles of the door 30.

The processor 290 may compare the identified angle of the door 30 with the first angle Θ1, and identify whether the angle of the door 30 is equal to or larger than the first angle Θ1. The first angle Θ1 may be experimentally or empirically set, e.g., an angle between 5 and 20 degrees.

In another example, the processor 290 may identify whether the accumulated or deducted number of changes in at least one of the output signals of the first and second position sensors 191 and 192 is equal to or greater than a first number corresponding to the first angle Θ1.

When the angle of the door 30 is not equal to nor larger than the first angle Θ1 in 1130, the refrigerator 1 may continue to accelerate the opening of the door 30 with the first torque.

When the angle of the door 30 is equal to or larger than the first angle Θ1 in 1130, the refrigerator 1 may open the door 30 at first velocity V1.

The processor 290 may control the driving motor 251 and the motor drive 251 to rotate the door 30 in a first direction (an opening direction) at the first velocity V1, based on the angle of the door 30 equal to or larger than the first angle Θ1. For example, the processor 290 may provide a target velocity command corresponding to the first velocity V1 to the motor drive 251 to control the rotation velocity of the door 30.

The first velocity V1 may correspond to a velocity at which the door 30 is naturally opened by the user. The first velocity V1 may be set experimentally or empirically.

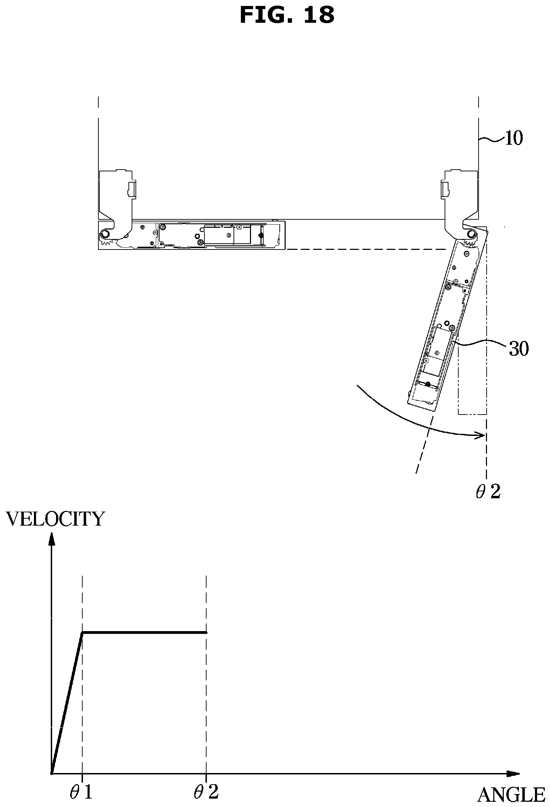

Accordingly, as shown in FIG. 18, when the angle of the door 30 is equal to or larger than the first angle Θ1, the door 30 may be opened at the first velocity V1.

The case that the refrigerator 1 rotates the door 30 at the first velocity V1 based on the angle of the door 30 reaching the first angle has thus far been described. The door opening operation of the refrigerator 1 is not, however, limited thereto.

For example, rotation velocity of the door 30 at a time when the angle of the door 30 reaches the first angle Θ1 may be higher than the first velocity V1. The processor 290 may reduce the torque of the driving motor 252 so that the rotation velocity of the door 30 reaches the first velocity V1 after the angle of the door 30 reaches the first angle Θ1, to naturally change the rotation velocity of the door 30.

For example, the rotation velocity of the door 30 at a time when the angle of the door 30 reaches the first angle Θ1 may be lower than the first velocity V1. The processor 290 may increase the torque of the driving motor 252 so that the rotation velocity of the door 30 reaches the first velocity V1 after the angle of the door 30 reaches the first angle Θ1, to naturally change the rotation velocity of the door 30.

For example, the processor 290 may rotate the door 30 at the first velocity V1 based on the rotation velocity of the door 30 reaching the first velocity V1 while accelerating the opening of the door 30 with the first torque. The angle of the door 30 may be about the first angle Θ1 when the rotation velocity of the door 30 reaches the first velocity V1.

For example, the processor 290 may rotate the door 30 at a constant velocity based on the angle of the door 30 reaching the first angle Θ1 while accelerating the opening of the door 30 with the first torque. The rotation velocity of the door 30 at a time when the angle of the door 30 reaches the first angle Θ1 may be about the first velocity V1.

The refrigerator 1 may identify whether the angle of the door 30 is equal to or larger than a second angle Θ2 while the door 30 is being opened, in 1150.

The processor 290 may compare the angle identified based on the output of the door position sensor 290 with the second angle Θ2, and identify whether the angle of the door 30 is equal to or larger than the second angle Θ2. The second angle Θ2 may be larger than the first angle Θ1. The second angle Θ2 may be an angle between e.g., 50 and 100 degrees.

Furthermore, the processor 290 may identify whether the accumulated or deducted number of changes in at least one of the output signals of the first and second position sensors 191 and 192 is equal to or greater than a second number corresponding to the second angle Θ2.

When the angle of the door 30 is not equal to nor larger than the second angle Θ2 in 1150, the refrigerator 1 may continue to open the door 30 at the first velocity V1.

When the angle of the door 30 is equal to or larger than the second angle Θ2 in 1150, the refrigerator 1 may stop driving the driving motor 252, in 1160.

The processor 290 may control the motor drive 251 to stop driving the driving motor 252 based on the angle of the door 30 equal to or larger than the second angle Θ2. For example, the processor 290 may control the motor drive 251 not to apply a driving current to the driving motor 252. Specifically, the processor 290 may control the motor drive 251 not to apply a driving voltage to the driving motor 252.

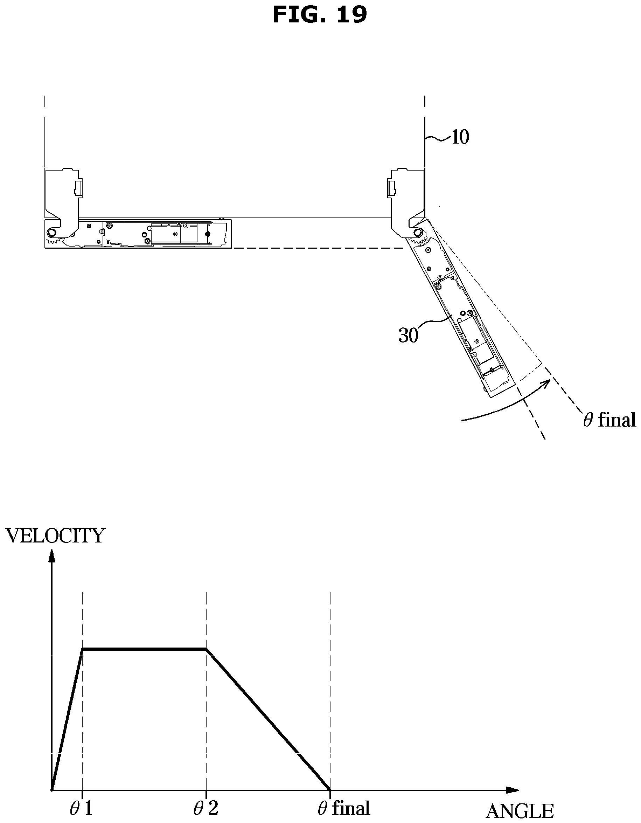

Hence, as shown in FIG. 19, when the angle of the door 30 is equal to or larger than the second angle Θ2, the rotation velocity of the door 30 may be reduced gradually or in phases due to the inertia of the door 30. As such, by reducing the rotation velocity (opening velocity) of the door 30 gradually or in phases, the door 30 may be naturally opened to the maximum without bounds.

Reducing the rotation velocity of the door 30 gradually or in phases is not limited to the processor 290 stopping the driving of the driving motor 252. For example, the processor 290 may provide a target velocity command for gradual or stepwise reduction to the motor drive 251. For example, the processor 290 may control the motor drive 251 for the driving motor 252 to apply second torque to the door 30 to decelerate the door 30. In other words, the processor 290 may control the motor drive 251 to apply a driving voltage having a set duty cycle to decelerate the door 30.

The refrigerator 1 may determine whether the door 30 is stopped, in 1170.

The processor 290 may identify whether the door 30 is stopped based on the output signal of the door position sensor 190. For example, the processor 290 may obtain a pair of output signals of the first and second position sensors 191 and 192 while the door 30 is being opened.

The processor 290 may identify whether the door 30 is stopped based on whether there is a change in output signals of the first and second position sensors 191 and 192. For example, when the output signals of the first and second position sensors 191 and 192 are changed within a set period of time, the processor 290 may identify that the door 30 is being opened. When the output signals of the first and second position sensors 191 and 192 are not changed within the set period of time, the processor 290 may identify that the door 30 is stopped.

When it is determined that the door 30 is not stopped in 1170, the refrigerator 1 may keep determining whether the door 30 is stopped.

When it is determined that the door 30 is stopped in 1170, the refrigerator 1 may identify a final open angle Θfinal of the door 30, in 1180.

The processor 290 may identify the final open angle Θfinal at which opening of the door 30 is completed, based on the door 30 stopped.

The processor 290 may identify a current open angle of the door 30 based on the output signal of the door position sensor 190 while controlling the driving motor 252 to open the door 30. Furthermore, the processor 290 may memorize or store the current open angle of the door 30 in the memory 291 while the door 30 is being opened.

The processor 290 may identify an open angle of the door 30 memorized or stored most recently in the memory 291 based on determination that the door 30 is stopped. The processor 290 may identify the open angle of the door 30 memorized or stored most recently in the memory 291 as the final open angle Θfinal at which opening of the door 30 is completed.

As described above, the refrigerator 1 may control the velocity at which the door 30 is opened, depending on the angle of the door 30. Hence, the refrigerator 1 may open the door 30 naturally and without bounds as if the user opens the door 30.

Furthermore, operations 1110 to 1180 shown in FIG. 16 are not essential components to automatically open the door 30 of the refrigerator 1, and at least some of the operations 1110 to 1180 may be omitted.

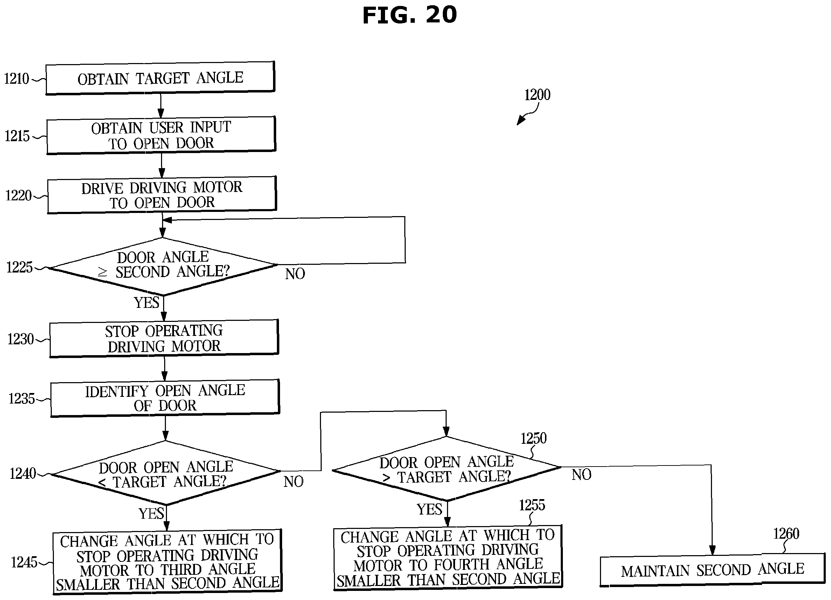

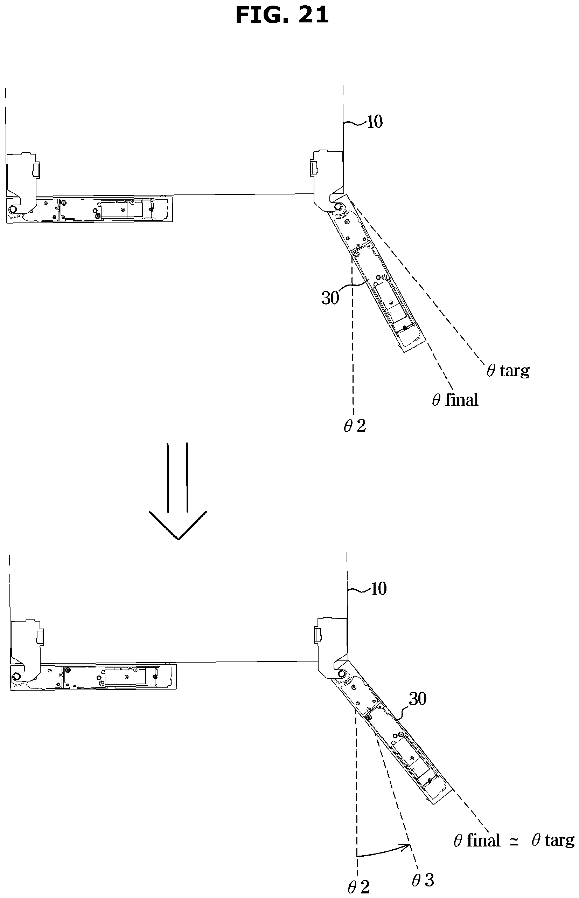

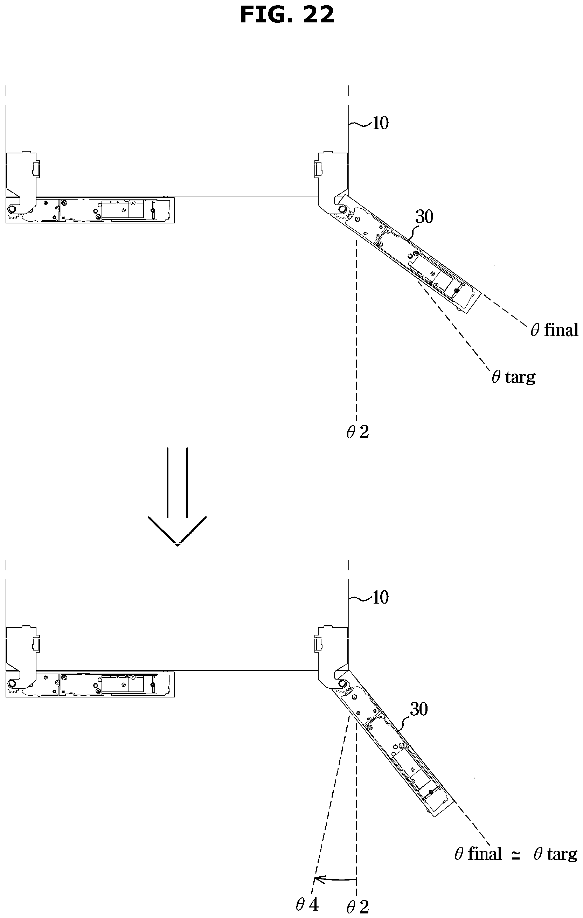

FIG. 20 illustrates a method by which a refrigerator opens a door, according to an embodiment. FIGS. 21 and 22 illustrate an example of a refrigerator controlling a door open angle according to the method shown in FIG. 20.

In connection with FIGS. 20, 21 and 22, a method 1200 by which the refrigerator 1 opens the door 30 will be described.

The refrigerator 1 may obtain a user input to set a target angle Otarg, in 1210.

The processor 290 may identify the user input to set a target angle Otarg based on an output signal received from the control panel 210, the microphone 220 (260), the optical module 270 or the communication module 270.

For example, the control panel 210 may obtain a user input to set the target angle Otarg through the input button 211 or the display 212. The processor 290 may identify the target angle based on the output signal of the control panel 210.

For example, the microphone 220 may obtain a user voice to set the target angle Otarg, and convert the user voice to an electrical voice signal. The processor 290 may identify the target angle based on the voice signal of the microphone 220.

For example, the optical module 260 may detect a user gesture to set the target angle Otarg. At least one of the first infrared sensor 263 and the second infrared sensor 266 included in the optical module 260 may detect an infrared ray reflected from the user's body part, and provide the first infrared detection signal to the processor 290 based on the detection of the infrared ray. The processor 290 may identify the target angle Otarg based on the first infrared detection signal.

For example, the user equipment may obtain a user input to set the target angle Otarg, and transmit a communication signal corresponding to the user input to the communication module 270 of the refrigerator 1. The processor 290 may identify the target angle Otarg set by the user based on the communication signal received through the communication module 270.

The refrigerator 1 may obtain a user input to open the door 30, in 1215.

The operation 1215 may be the same as the operation 1110 of FIG. 16.

The refrigerator 1 may drive the driving motor 252 to open the door 30, in 1220.

The operation 1220 may include the operations 1120, 1130 and 1140 shown in FIG. 16. For example, the refrigerator 1 may open the door 30 with the first torque, and open the door 30 at the first velocity V1 when the open angle of the door 30 is equal to or larger than the first angle Θ1.

The refrigerator 1 may identify whether the angle of the door 30 is equal to or larger than the second angle Θ2 while the door 30 is being opened in 1225, and stop driving the driving motor 252 when the angle of the door 30 is equal to or larger than the second angle Θ2 in 1230.

The operations 1225 and 1230 may be the same as the operations 1150 and 1160 shown in FIG. 16, respectively.

The refrigerator 1 may identify the final open angle of the door 30 which is stopped, in 1235.

The operation 1235 may include the operations 1170 and 1180 shown in FIG. 16.

The refrigerator 1 may identify whether the final open angle Θfinal of the door 30 is smaller than the target angle Otarg, in 1240.

The processor 290 may compare the open angle of the door 30 after the opening of the door 30 is stopped, i.e., the final open angle Θfinal at which opening of the door 30 is completed with the target angle Otarg set in operation 1210. The processor 290 may identify whether the final open angle Θfinal of the door 30 is smaller than the target angle Otarg based on the result of the comparing.

When the final open angle Θfinal of the door 30 is smaller than the target angle Otarg in 1240, the refrigerator 1 may change an angle at which to stop driving the driving motor 252 to a third angle Θ3 larger than the second angle Θ2, in 1245.

It was described in the operation 1230 that the processor 290 controls the motor drive 251 to stop driving the driving motor 252 when the open angle of the door 30 is equal to or larger than the second angle Θ2 while the door 30 is being opened.

As shown in FIG. 21, after driving of the driving motor 252 is stopped at the second angle Θ2, the door 30 may be further opened according to the inertia and stopped at the final open angle Θfinal. In this case, the final open angle Θfinal may be smaller than the target angle Otarg.

The processor 290 may control an angle at which to stop driving the driving motor 252 so that the final open angle Θfinal is identical to the target angle Otarg.

When the final open angle Θfinal is smaller than the target angle Otarg, the processor 290 may increase the angle at which to stop driving the driving motor 252 so that the final open angle Θfinal is identical to the target angle Otarg. Specifically, the processor 290 may set the angle at which to stop driving the driving motor 252 to the third angle Θ3 larger than the second angle Θ2. This may increase the final open angle Θfinal.

The processor 290 may set the third angle Θ3 by referring to the memory 291, or calculate the third angle Θ3 based on the final open angle Θfinal, the target angle Otarg and the second angle Θ2.

For example, the memory 291 may store a table including a plurality of target angles Otarg, and angles at which to stop driving the driving motor 252 to correspond to the respective target angles Otarg. Furthermore, the memory 291 may store a table including a difference between the target angle Otarg and the final open angle Θfinal, and an angle at which to stop driving the driving motor 252 to correspond to the target angle Otarg.

The processor 290 may refer to the table stored in the memory 291, and set an angle at which to stop driving the driving motor 252 to the third angle Θ3 larger than the second angle Θ2 based on the target angle Otarg and the final open angle Θfinal.

In another example, the processor 290 may calculate the third angle Θ3 larger than the second angle Θ2 based on the final open angle Θfinal, the target angle Otarg and the second angle Θ2. Specifically, the processor 290 may calculate a fourth angle Θ4 based on the difference between the target angle Otarg and the final open angle Θfinal, and the second angle Θ2. For example, the processor 290 may calculate the third angle Θ3 by summing the difference between the target angle Otarg and the final open angle Θfinal and the second angle Θ2.

After changing the angle at which to stop driving the driving motor 252 to the third angle Θ3, the refrigerator 1 may re-open the door 30 from the closed state. In this case, when the target angle Otarg is not changed, the processor 290 may stop driving the driving motor 252 at the third angle Θ3 and the door 30 may be stopped at about the target angle Otarg as shown in FIG. 21.

When the final open angle Θfinal of the door 30 is not smaller than the target angle Otarg in 1240, the refrigerator 1 may identify whether the final open angle Θfinal of the door 30 is larger than the target angle Otarg in 1250.

The processor 290 may compare the final open angle Θfinal of the door 30 with the target angle Otarg set in the operation 1210, and identify whether the final open angle Θfinal of the door 30 is larger than the target angle Otarg.

When the final open angle Θfinal of the door 30 is larger than the target angle Otarg in 1250, the refrigerator 1 may change an angle at which to stop driving the driving motor 252 to the fourth angle Θ4 smaller than the second angle Θ2, in 1255.

As shown in FIG. 22, after driving of the driving motor 252 is stopped at the second angle Θ2, the door 30 may be further opened according to the inertia and stopped at the final open angle Θfinal. In this case, the final open angle Θfinal may be larger than the target angle Otarg.

The processor 290 may control an angle at which to stop driving the driving motor 252 so that the final open angle Θfinal is identical to the target angle Otarg.

When the final open angle Θfinal is larger than the target angle Otarg, the processor 290 may reduce the angle at which to stop driving the driving motor 252 so that the final open angle Θfinal is identical to the target angle Otarg. Specifically, the processor 290 may set the angle at which to stop driving the driving motor 252 to the fourth angle Θ4 smaller than the second angle Θ2. This may reduce the final open angle Θfinal.

The processor 290 may set the fourth angle Θ4 by referring to the memory 291, or calculate the fourth angle Θ4 based on the final open angle Θfinal, the target angle Otarg and the second angle Θ2.

For example, the processor 290 may refer to the table stored in the memory 291, and set an angle at which to stop driving the driving motor 252 to the fourth angle Θ4 smaller than the second angle Θ2 based on the target angle Otarg and the final open angle Θfinal.

In another example, the processor 290 may calculate the fourth angle Θ4 smaller than the second angle Θ2 based on the final open angle Θfinal, the target angle Otarg and the second angle Θ2. The processor 290 may calculate the fourth angle Θ4 which is a difference between a difference between the target angle Otarg and the final open angle Θfinal, and the second angle Θ2.

After changing the angle at which to stop driving the driving motor 252 to the fourth angle Θ4, the refrigerator 1 may re-open the door 30 from the closed state. In this case, when the target angle Otarg is not changed, the processor 290 may stop driving the driving motor 252 at the fourth angle Θ4 and the door 30 may be stopped at about the target angle Otarg as shown in FIG. 22.

When the final open angle Θfinal of the door 30 is not larger than the target angle Otarg in 1250, the refrigerator 1 may maintain an angle at which to stop driving the driving motor 252 to the second angle Θ2, in 1260.

When the final open angle Θfinal of the door 30 is not smaller than the target angle Otarg and the final open angle Θfinal of the door 30 is not larger than the target angle Otarg, the processor 290 may identify that the final open angle Θfinal is almost the same as the target angle Otarg.

Accordingly, the processor 290 may not change but maintain the angle at which to stop driving the driving motor 252 at the second angle Θ2.

As described above, the refrigerator 1 may control the driving motor 252 to stop the door 30 at the target angle Otarg set by the user.

Furthermore, operations 1210 to 1260 shown in FIG. 20 are not essential components to automatically open the door 30 of the refrigerator 1, and at least some of the operations 1210 to 1260 may be omitted.

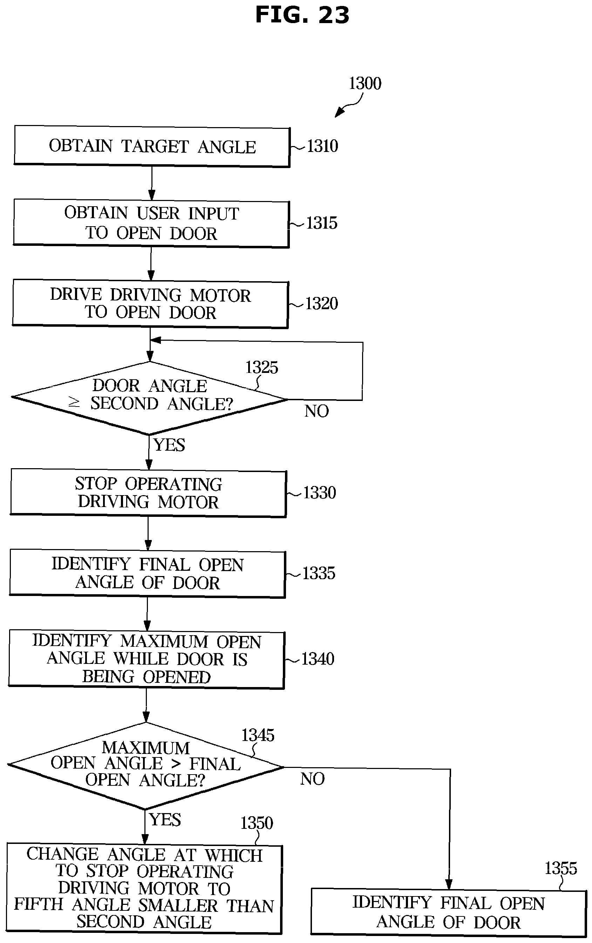

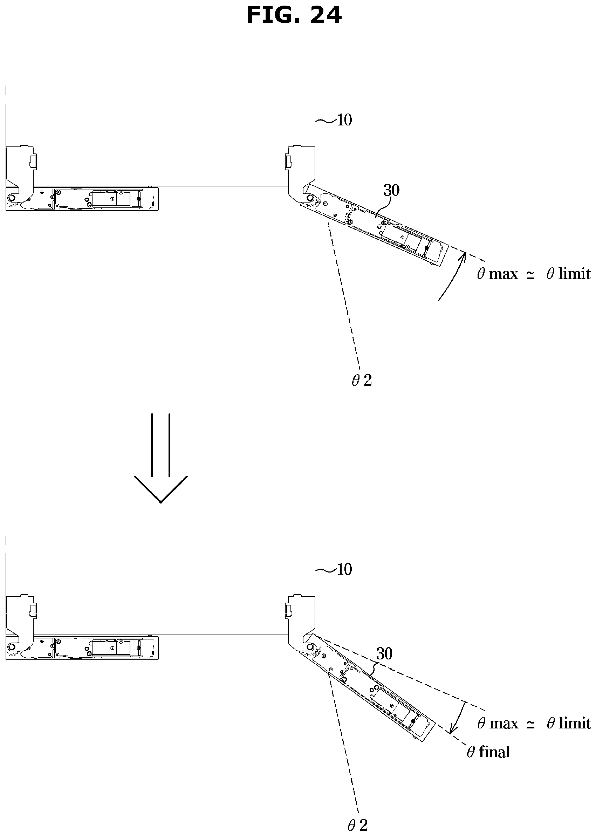

FIG. 23 illustrates a method by which a refrigerator opens a door, according to an embodiment. FIGS. 24, 25 and 26 illustrate an example of a refrigerator controlling a door open angle according to the method shown in FIG. 23.

In connection with FIGS. 23, 24, 25 and 26, a method 1300 by which the refrigerator 1 opens the door 30 will be described.

The refrigerator 1 may obtain a user input to set the target angle Otarg in 1310, obtain a user input to open the door 30 in 1315, drive the driving motor 252 to open the door 30 in 1320, identify whether the angle of the door 30 is equal to or larger than the second angle Θ2 while the door 30 is being opened in 1325, stop driving the driving motor 252 in 1330 when the angle of the door 30 is equal to or larger than the second angle Θ2 in 1325, and identify a final open angle of the door 30 in the closed state in 1335.

Operations 1310, 1315, 1320, 1325, 1330 and 1335 may be the same as the operations 1210, 1215, 1220, 1225, 1230 and 1235 shown in FIG. 20, respectively.

The refrigerator 1 may identify a maximum open angle while the door 30 is being opened in 1340.

The processor 290 may identify an open angle of the door 30 while the door 30 is being opened (i.e., an angle at which the door is stopped while being opened).

Especially, the processor 290 may store a maximum value of the open angle, i.e., the maximum open angle Omax, of the door 30 while the door 30 is being opened.

For example, when the door 30 is rotated forward (opened), the open angle of the door 30 may constantly increase. Accordingly, the maximum open angle Omax may continue to be updated with the current open angle of the door 30 when the door 30 is rotated forward. In this case that the door 30 is rotated forward, the maximum open angle Omax may be the same as the final open angle Θfinal of the door 30.

In another example, when the door 30 is rotated backward (closed), the open angle of the door 30 may constantly decrease. Accordingly, the maximum open angle Omax may be maintained at a first open angle when the door 30 is rotated backward. In this case that the door 30 is rotated backward, the maximum open angle Omax may be the same as the first open angle of the door 30.

The door 30 that is opening may be rotated forward and then backward.

As shown in FIG. 24, when the door 30 rotating forward reaches a limited angle Olimit, the door 30 may be bounded at the limited angle Olimit and rotated backward. The door 30 usually has limited open angles. In other words, rotation of the door 30 is not unlimitedly allowed, but is allowed within a limited angle Olimit set physically. The rotation of the door 30 may be allowed up to about 130°.

As such, when the door 30 that is being rotated forward starts to be rotated backward at the limited angle Olimit, the maximum open angle Omax of the door 30 may be the same as the limited angle Olimit of the door 30. In this case, the maximum open angle Omax of the door 30 may be larger than the final open angle Θfinal of the door 30.

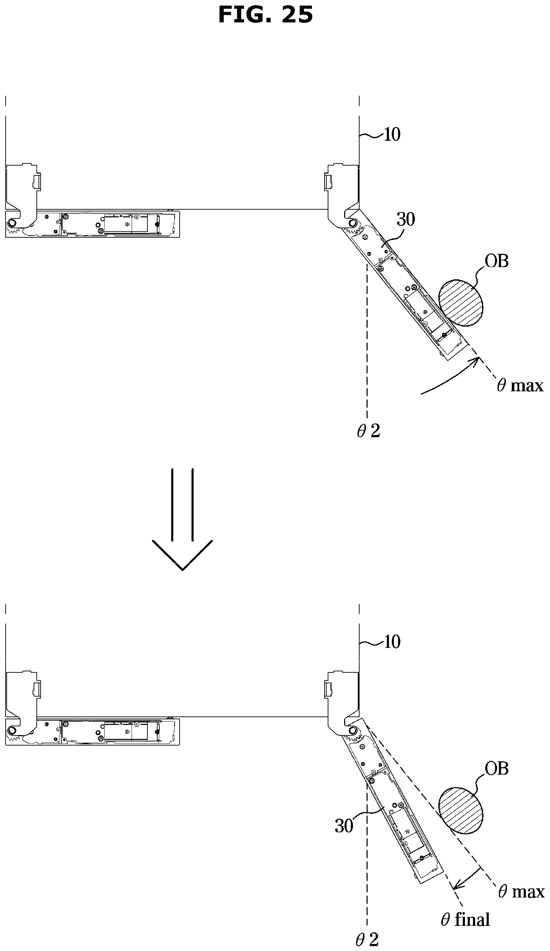

Furthermore, as shown in FIG. 25, when the door 30 rotating forward comes into contact with an obstacle OB, the door 30 may be bounded by the obstacle OB and rotated backward. In other words, the rotation direction of the door 30 may be changed due to elasticity of the obstacle OB.

As such, when the door 30 that is being rotated forward starts to be rotated backward due to the obstacle OB, the maximum open angle Omax of the door 30 may be the same as an angle corresponding to the location of the obstacle OB. In this case, the maximum open angle Omax of the door 30 may be larger than the final open angle Θfinal of the door 30.

The refrigerator 1 may identify whether the maximum open angle Omax is larger than the final open angle Θfinal, in 1345.

The processor 290 may compare the maximum open angle Omax identified in operation 1340 with the final open angle Θfinal after the door 30 is stopped, and identify whether the maximum open angle Omax is larger than the final open angle Θfinal.

When the maximum open angle Omax is larger than the final open angle Θfinal in 1345, the refrigerator 1 may change an angle at which to stop driving the driving motor 252 to a fifth angle Θ5 smaller than the second angle Θ2, in 1350.

The maximum open angle Omax being larger than the final open angle Θfinal may mean that the door 30 that is being opened is rotated backward. In other words, the maximum open angle Omax being larger than the final open angle Θfinal may indicate that the door 30 is bounded at the limited angle Olimit or the door 30 is bounded by the obstacle OB.

The processor 290 may control the angle at which to stop driving the driving motor 252 to suppress or prevent the door 30 from being bounded.

When the maximum open angle Omax is larger than the final open angle Θfinal, processor 290 may reduce the angle at which to stop driving the driving motor 252 so that the final open angle Θfinal is identical to the maximum open angle Omax. Specifically, the processor 290 may set the angle at which to stop driving the driving motor 252 to the fifth angle Θ5 smaller than the second angle Θ2. This may reduce the final open angle Θfinal.

The processor 290 may set the fifth angle Θ5 by referring to the memory 291, or calculate the fifth angle Θ5 based on the final open angle Θfinal, the maximum open angle Omax and the second angle Θ2.

For example, the processor 290 may refer to the table stored in the memory 291, and set the angle at which to stop driving the driving motor 252 to the fifth angle Θ5 smaller than the second angle Θ2 based on the maximum open angle Omax and the final open angle Θfinal.

In another example, the processor 290 may calculate the fifth angle Θ5 smaller than the second angle Θ2 based on the final open angle Θfinal, the maximum open angle Omax and the second angle Θ2. The processor 290 may calculate the fifth angle Θ5 which is a difference between a difference between the maximum open angle Omax and the final open angle Θfinal, and the second angle Θ2.

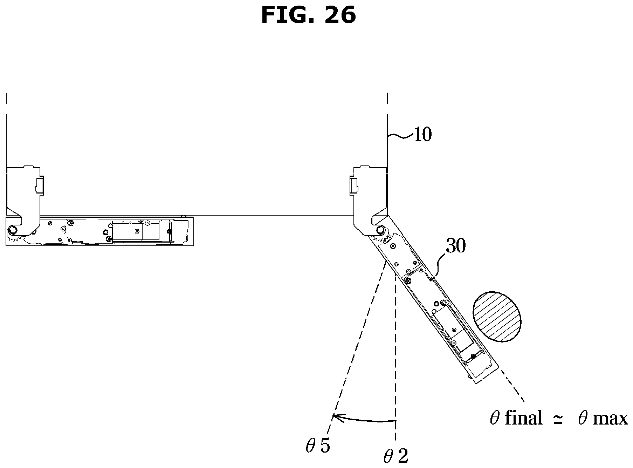

After changing the angle at which to stop driving the driving motor 252 to the fifth angle O5, the refrigerator 1 may re-open the door 30 from the closed state. In this case, the processor 290 may stop driving the driving motor 252 at the fifth angle Θ5 and the door 30 may be stopped at about the maximum open angle Omax as shown in FIG. 26.

When the final open angle Θfinal of the door 30 is not larger than the maximum open angle Omax in 1345, the refrigerator 1 may maintain an angle at which to stop driving the driving motor 252 to the second angle Θ2, in 1355.

When the final open angle Ofanl of the door 30 is not larger than the maximum open angle Omax, the processor 290 may identify that the door 30 is not bounded.

Accordingly, the processor 290 may not change but maintain the angle at which to stop driving the driving motor 252 at the second angle Θ2.

As described above, the refrigerator 1 may control the driving motor 252 not to bound the door 30.

Furthermore, operations 1310 to 1355 shown in FIG. 23 are not essential components to automatically open the door 30 of the refrigerator 1, and at least some of the operations 1310 to 1355 may be omitted.

In an embodiment, an electric apparatus includes a housing; a door rotationally arranged on one side of the housing; a sensor configured to detect rotation of the door; a motor configured to provide torque to the door to rotate the door; and a processor configured to obtain an open angle of the door based on an output signal of the sensor and control the motor to open the door to a target angle set by a user.

Accordingly, the electric apparatus may automatically open the door to the target angle desired by the user.

The processor may control the motor to reduce a final open angle at which opening of the door is completed based on the final open angle larger than the target angle, and control the motor to increase the final open angle at which opening of the door is completed based on the final open angle smaller than the target angle.

Accordingly, the electric apparatus may automatically open the door to the target angle desired by the user even with a change in a load put on the door.

The processor may control the motor to reduce the final open angle at which opening of the door is completed based on a maximum value of an open angle of the door larger than the final open angle.

Accordingly, the electric apparatus may open the door while preventing the door from being bounded by a limited angle or an obstacle.

The processor may control the motor to provide torque to the door to rotate the door based on the open angle of the door smaller than a first angle smaller than the target angle, and control the motor to stop providing the torque to the door based on the open angle of the door equal to or larger than the first angle.

Accordingly, the electric apparatus may naturally open the door to the target angle without rapidly changing rotation velocity of the door.

An angle at which to stop providing the torque to the door may be based on the final open angle at which opening of the door is completed.

The processor may change the angle at which to stop providing the torque to the door to a second angle larger than the first angle based on the final open angle at which opening of the door is completed smaller than the target angle, and control the motor to stop providing the torque to the door based on the open angle of the door being the second angle. The second angle may be based on a difference between the final open angle and the target angle.

Accordingly, the electric apparatus may naturally open the door to the target angle desired by the user even with an increase in a load put on the door.

The processor may change the angle at which to stop providing the torque to the door to a third angle smaller than the first angle based on the final open angle at which opening of the door is completed larger than the target angle, and control the motor to stop providing the torque to the door based on the open angle of the door being the third angle. The third angle may be based on a difference between the final open angle and the target angle.

Accordingly, the electric apparatus may naturally open the door to the target angle desired by the user even with a decrease in a load put on the door.

The processor may change the angle at which to stop providing the torque to the door to a fourth angle smaller than the first angle based on a maximum value of the open angle of the door larger than the final open angle at which opening of the door is completed, and control the motor to stop providing the torque to the door based on the open angle of the door being the fourth angle.

Accordingly, the electric apparatus may naturally open the door while preventing the door from being bounded by a limited angle or an obstacle.

The processor may control the motor to open the door to a target angle selected by the user from among a plurality of target angles.

Accordingly, the electric apparatus may automatically open the door to the target angle desired by the user.

The electric apparatus may further include a touch screen configured to obtain a user input. The processor may control the motor to open the door to a target angle selected by a user input through the touch screen.

Accordingly, the electric apparatus may obtain a target angle desired by the user based on a touch input of the user.

The electric apparatus may further include an optical module including a first infrared source irradiating a first infrared ray, a first infrared sensor arranged adjacent to the first infrared source, a second infrared source irradiating a second infrared ray and a second infrared sensor arranged adjacent to the second infrared source. The processor may control the motor to open the door to a target angle corresponding to at least one of an output signal of the first infrared sensor and an output signal of the second infrared sensor.

Accordingly, the electric apparatus may obtain a target angle desired by the user based on a gesture of the user.

The electric apparatus may further include a microphone configured to obtain a voice of the user. The processor may control the motor to open the door to a target angle corresponding to an output signal of the microphone.

Accordingly, the electric apparatus may obtain a target angle desired by the user based on the voice of the user.

The electric apparatus may further include a communication module configured to receive a communication signal from a user equipment. The processor may control the motor to open the door to a target angle corresponding to the communication signal.

Accordingly, the electric apparatus may obtain a target angle desired by the user through the user equipment.

Meanwhile, the embodiments of the disclosure may be implemented in the form of a recording medium for storing instructions to be carried out by a computer. The instructions may be stored in the form of program codes, and when executed by a processor, may generate program modules to perform operations in the embodiments of the disclosure. The recording media may correspond to computer-readable recording media.

The computer-readable recording medium includes any type of recording medium having data stored thereon that may be thereafter read by a computer. For example, it may be a read only memory (ROM), a random access memory (RAM), a magnetic tape, a magnetic disk, a flash memory, an optical data storage device, etc.

The machine-readable storage medium may be provided in the form of a non-transitory storage medium. The term 'non-transitory' storage medium may mean that the storage medium is a tangible device which does not include a signal, e.g., electromagnetic waves, without distinguishing between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

The embodiments of the disclosure have thus far been described with reference to accompanying drawings. It will be obvious to people of ordinary skill in the art that the present disclosure may be practiced in other forms than the embodiments as described above without changing the technical idea or essential features of the present disclosure. The above embodiments are only by way of example, and should not be interpreted in a limited sense.

## Claims

1. An electric apparatus comprising:
a door that is rotatable to open and close;
a sensor configured to detect rotation of the door, and to produce a corresponding output signal;
a motor configured to provide a torque to the door to rotate the door; and
a processor configured to obtain an open angle of the door based on the output signal produced by the sensor, and, based on the obtained open angle, to control the motor to provide the torque to the door to open the door to a target angle set by a user.

2. The electric apparatus of claim 1, wherein the processor is configured to
control the motor to reduce a final open angle at which opening of the door is completed based on the final open angle being larger than the target angle, and
control the motor to increase the final open angle at which opening of the door is completed based on the final open angle being smaller than the target angle.

3. The electric apparatus of claim 1, wherein the processor is configured to control the motor to reduce a final open angle at which opening of the door is completed based on a maximum value of the obtained open angle being larger than the final open angle.

4. The electric apparatus of claim 1, wherein the processor is configured to
control the motor to provide the torque to the door to rotate the door based on the obtained open angle being smaller than a first angle that is smaller than the target angle, and
control the motor to stop providing the torque to the door based on the obtained open angle being equal to or larger than the first angle.

5. The electric apparatus of claim 4, wherein the obtained open angle at which to control the motor to stop providing the torque to the door is based on a final open angle at which opening of the door is completed.

6. The electric apparatus of claim 4, wherein the processor is configured to
change the obtained open angle at which to control the motor to stop providing the torque to the door to a second angle larger than the first angle, based on a final open angle at which opening of the door is completed being smaller than the target angle, and
control the motor to stop providing the torque to the door based on the obtained open angle being the second angle.

7. The electric apparatus of claim 6, wherein the second angle is based on a difference between the final open angle and the target angle.

8. The electric apparatus of claim 4, wherein the processor is configured to
change the obtained open angle at which to stop providing the torque to the door to a third angle that is smaller than the first angle, based on a final open angle at which opening of the door is completed being larger than the target angle, and
control the motor to stop providing the torque to the door based on the obtained open angle being the third angle.

9. The electric apparatus of claim 8, wherein the third angle is based on a difference between the final open angle and the target angle.

10. The electric apparatus of claim 4, wherein the processor is configured to
change the obtained open angle at which to stop providing the torque to the door to a fourth angle smaller than the first angle, based on a maximum value of the obtained open angle being larger than the final open angle at which opening of the door is completed, and
control the motor to stop providing the torque to the door based on the obtained open angle of the door being the fourth angle.

11. The electric apparatus of claim 1, wherein the processor is configured to control the motor to provide the torque to the door to open the door to a target angle selected by the user from among a plurality of target angles.

12. The electric apparatus of claim 1, further comprising:
a touch screen configured to obtain a user input,
wherein the processor is configured to control the motor to provide the torque to the door to open the door to a target angle selected by the user input through the touch screen.

13. The electric apparatus of claim 1, further comprising:
a first infrared source configured to irradiate a first infrared ray;
a first infrared sensor adj acent to the first infrared source;
a second infrared source configured to irradiate a second infrared ray; and
a second infrared sensor adjacent to the second infrared source,
wherein the processor is configured to control the motor to provide the torque to the door to open the door to a target angle corresponding to at least one of an output signal of the first infrared sensor and an output signal of the second infrared sensor.

14. The electric apparatus of claim 1, further comprising:
a microphone configured to obtain a voice of the user,
wherein the processor is configured to control the motor to provide the torque to the door to open the door to a target angle corresponding to an output signal of the microphone.

15. The electric apparatus of claim 1, further comprising:
a communication module configured to receive a communication signal from a user equipment,
wherein the processor is configured to control the motor to provide the torque to the door to open the door to a target angle corresponding to the received communication signal.
